(19) Europäisches Patentamt

European Patent Office

Office européen des brevets

(11) **EP 0 956 641 B1**

(12) **EUROPÄISCHE PATENTSCHRIFT**

(45) Veröffentlichungstag und Bekanntmachung des Hinweises auf die Patenterteilung:
**13.09.2006  Patentblatt 2006/37**

(21) Anmeldenummer: **98907827.4**

(22) Anmeldetag: **19.01.1998**

(51) Int Cl.:
*H02P 21/00* *(2006.01)*

(86) Internationale Anmeldenummer:
**PCT/DE1998/000158**

(87) Internationale Veröffentlichungsnummer:
**WO 1998/034337 (06.08.1998 Gazette 1998/31)**

(54) **VERFAHREN UND VORRICHTUNG ZUR BESTIMMUNG EINER ROTORWINKELGESCHWINDIGKEIT EINER GEBERLOSEN, FELDORIENTIERT BETRIEBENEN DREHFELDMASCHINE**

METHOD AND DEVICE FOR DETERMINING THE ANGULAR VELOCITY OF A ROTOR OF A SENSORLESS FIELD ORIENTATED POLYPHASE MACHINE

PROCEDE ET DISPOSITIF POUR DETERMINER LA VITESSE ANGULAIRE DU ROTOR D'UNE MACHINE POLYPHASEE COMMANDEE PAR ORIENTATION DE CHAMP, SANS CAPTEUR

(84) Benannte Vertragsstaaten:
**AT CH DE ES FR GB IT LI NL SE**

(30) Priorität: **29.01.1997  DE 19703248**

(43) Veröffentlichungstag der Anmeldung:
**17.11.1999  Patentblatt 1999/46**

(73) Patentinhaber: **SIEMENS AKTIENGESELLSCHAFT**
**80333 München (DE)**

(72) Erfinder: **DEPENBROCK, Manfred**
**D-44797 Bochum (DE)**

(56) Entgegenhaltungen:
**DE-A- 4 433 551          DE-A- 19 531 771**

- **BAADER U ET AL: "DIRECT SELF CONTROL (DSC) OF INVERTER-FED INDUCTION MACHINE: A BASIS FOR SPEED CONTROL WITHOUT SPEED MEASUREMENT" 1.Mai 1992 , IEEE TRANSACTIONS ON INDUSTRY APPLICATIONS, VOL. 28, NR. 3, PAGE(S) 581 - 588 XP000306107 siehe Seite 584, Absatz III**
- **MAISCHAK D ET AL: "SCHNELLE DREHMOMENTREGELUNG IM GESAMTEN DREHZAHLBEREICH EINES HOCHAUSGENUTZTEN DREHFELDANTRIEBS FAST TORQUE CONTROL IN THE WHOLE SPEED RANGE OF AN EXTREMELY UTILIZED THREE-PHASE A.C. DRIVE" ARCHIV FUER ELEKTROTECHNIK, Bd. 77, 1994, Seiten 289-301, XP000614237 in der Anmeldung erwähnt**

**Beschreibung**

Die Erfindung bezieht sich gattungsgemäß auf ein Verfahren zur Bestimmung einer Rotorwinkelgeschwindigkeit einer geberlosen, feldorientiert betriebenen Drehfeldmaschine und auf eine Vorrichtung zur Durchführung des Verfahrens.

Ein Verfahren gemäß Oberbegriff des Anspruchs 1 und eine Vorrichtung zur Durchführung des Verfahrens gemäß Oberbegriff des Anspruchs 31 ist aus einer älteren deutschen Patentanmeldung DE 195 31 771 A1 bekannt.

Die Erfindung beruht auf der Erkenntnis, daß unter stationären Betriebsbedingungen ein Unterschied:

$$\Delta\omega\,/\,\omega_* \;=\; \hat{\omega}\,/\,\omega_* - \omega\,/\,\omega_* \;\hat{=}\; \Delta n \;=\; \hat{n} - n \qquad\qquad (1)$$

zwischen einer normierten Drehzahl $\hat{n}$ des Maschinenmodells und einer normierten Drehzahl $n$ der Drehfeldmaschine auftritt.

Im stationären Betrieb besteht dann zwischen der normierten Drehzahldifferenz $\Delta\tilde{n}$ und der Regelabweichung $\tilde{\Delta I}$ am Eingang des Ausgleichsreglers der älteren deutschen Patentanmeldung formal der Zusammenhang:

$$\tilde{\Delta I} \;=\; \tilde{u}\cdot(-\Delta\tilde{n}) \quad \text{mit} \quad \tilde{u} = f(\hat{n}_s,\,\hat{n}_r,\,\hat{\sigma},\,\hat{\rho},\,\overrightarrow{\hat{T}}^{\,*}) \qquad\qquad (2)$$

$\hat{n}_r$     Modellrotorfrequenzzahl

$\hat{n}_s$     Modellständerfrequenzzahl

$\hat{\sigma} = \hat{L}_\sigma\,/\,(\hat{L}_\mu + \hat{L}_\sigma)$     Streufaktor der Drehfeldmaschine

$\hat{\rho} = \hat{T}_r\,/\,\hat{T}_s = (\hat{L}_\mu + \hat{L}_\sigma)\cdot\hat{R}_s\,/\,(\hat{R}_r\cdot\hat{R}_\mu)$     Zeitkonstantenverhältnis

$\overrightarrow{\hat{T}}$     gewählter Bezugsraumzeiger

Die "-"-Zeichen über den Formelbuchstaben bedeuten, daß nur stationäre Betriebszustände betrachtet werden.

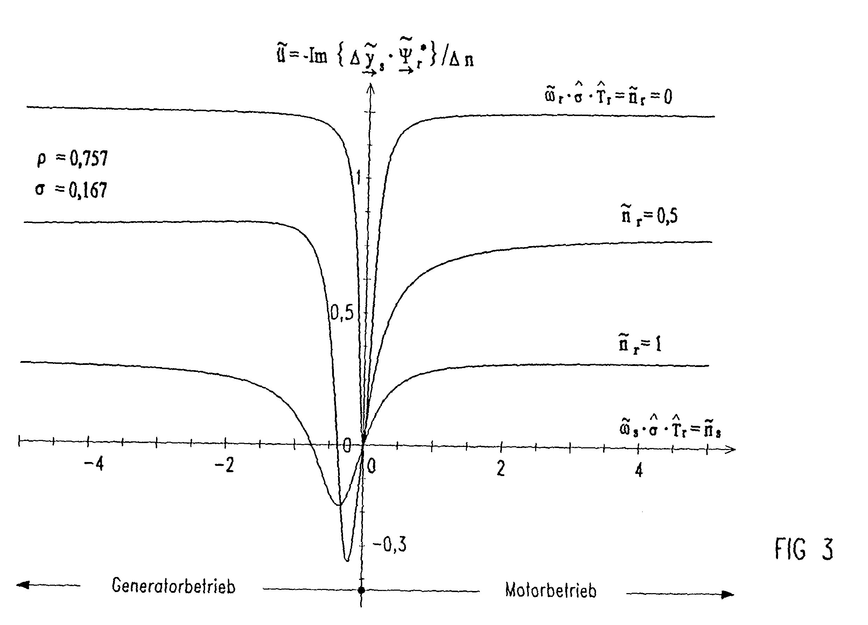

Gemäß Gleichung 2 ändert sich die Größe des stationären Übertragungsfaktors $\tilde{u}$ im allgemeinen erheblich in Abhängigkeit von den Betriebsparametern Ständerfrequenzzahl $\hat{n}_s$ und Rotorfrequenzzahl $\hat{n}_r$, die einen stationären Arbeitspunkt der Drehfeldmaschine kennzeichnen. Die Figur 3 zeigt diese Abhängigkeit für den Fall, daß der bezogene Rotorflußraumzeiger $\overrightarrow{\hat{\Psi}}_r$ als Bezugsraumzeiger $\overrightarrow{\hat{T}}$ zur Aufspaltung des Statorstrom-Modellraumzeigers und des Statorstrom-Istraumzeigers gewählt wurde. Der Betriebsparameter Ständerfrequenzzahl $\hat{n}_s$ und der Betriebsparameter Rotorfrequenzzahl $\hat{n}_r$ sind mittels der normierten Drehzahl $n$ gemäß folgender Gleichung:

$$\tilde{n}_s \;=\; \tilde{n} + \tilde{n}_r$$

miteinander verknüpft.

Die Normierung auf die Rotorkippkreisfrequenz $\omega_{rK} = R_r\,/\,L_\sigma$ und das Zeichen "-" zur Kennzeichnung des stationären Betriebes sind aus dem Aufsatz "Schnelle Drehmomentregelung im gesamten Drehzahlbereich eines hochausgenutzten Drehfeldantriebs", abgedruckt in der DE-Zeitschrift "Archiv für Elektrotechnik", 1994, Band 77, Seiten 289 bis 301, bekannt.

Der Erfindung liegt nun die Aufgabe zugrunde, das bekannte Verfahren und die bekannte Vorrichtung zur Durchführung dieses Verfahrens derart weiterzubilden, daß die störende Abhängigkeit des stationären Übertragungsfaktors vom Betriebsparameter Rotorfrequenzzahl erheblich verringert wird.

Diese Aufgabe wird gelöst mit den Merkmalen der unabhängigen Ansprüche. Bevorzugte Ausgestaltungen der Erfindung sind in den abhängigen Ansprüchen definiert.

Dadurch, daß als konjugiert komplexer Bezugsraumzeiger der konjugiert komplexe normierte Rotorflußraumzeiger, geteilt durch sein Betragsquadrat, vorgesehen ist, und daß der Statorstrom-Modellraumzeiger und der Statorstrom-Istraumzeiger jeweils betriebspunktabhängig in seiner Lage und seiner Amplitude aufbereitet werden, bevor diese aufbereiteten Raumzeiger in das komplexe Bezugssystem transformiert werden, wird erreicht, daß die störende Abhängigkeit des stationären Übertragungsfaktors vom Betriebsparameter Rotorfrequenzzahl erheblich verringert wird.

Bei einem vorteilhaften Verfahren werden der Statorstrom-Modell- und -Istraumzeiger jeweils normiert und aus diesen normierten Raumzeigern ein Differenzstrom-Raumzeiger gebildet, der dann, wie bereits erläutert, aufbereitet und anschließend transformiert wird. Somit wird ebenfalls die Abhängigkeit des stationären Übertragungsfaktors vom Betriebsparameter Rotorfrequenzzahl erheblich verringert, wobei der Aufwand ebenfalls erheblich verringert wird.

Diese beiden Verfahren können durch Berechnung eines komplexen Faktors, der jeweils vom Betriebsparameter Rotorfrequenzzahl und eines Systemparameters Streufaktor und/oder Zeitkonstantenverhältnis abhängig ist, optimiert werden.

Bei einem weiteren vorteilhaften Verfahren wird ein Zeitintegralwert des Differenzstrom-Raumzeigers gebildet, der anschließend aufbereitet und dem aufbereiteten Differenzstrom-Raumzeiger aufaddiert wird. Dadurch wird erreicht, daß der stationäre Übertragungsfaktor den konstanten Wert Eins hat. Somit ist dieser stationäre Übertragungsfaktor nicht mehr vom Betriebsparameter Rotorfrequenzzahl und vom Systemparameter Streufaktor und/oder Zeitkonstantenverhältnis abhängig.

Durch Variation der Berechnung der komplexen Faktoren zur Aufbereitung des Differenzstrom-Raumzeigers und seines Zeitintegralwertes kann das Verfahren hinsichtlich seines dynamischen Verhaltens verbessert werden, ohne daß sich der stationäre Übertragungsfaktor ändert.

Bei einem weiteren vorteilhaften Verfahren wird eine zeitliche Ableitung des Differenzstrom-Raumzeigers gebildet, die der Summe des aufbereiteten Differenzstromintegral-Raumzeigers und des aufbereiteten Differenzstrom-Raumzeigers aufaddiert wird, wobei anschließend dieser gebildete Summen-Raumzeiger transformiert wird. Dadurch wird das Übertragungsverhalten im dynamischen Betriebszustand nochmals verbessert.

Bei einer Vorrichtung zur Durchführung des Verfahrens ist der Signalverarbeitung eine Einrichtung zur Berechnung von komplexen Faktoren zur Aufbereitung des Statorstrom-Modellraumzeigers, des Statorstrom-Istraumzeigers, eines Differenzstrom-Raumzeigers und eines Differenzstromintegral-Raumzeigers nachgeschaltet und es sind mehrere Multiplizierer vorgesehen, die eingangsseitig einerseits mit dieser Einrichtung und andererseits mit den Elementen verbunden sind, an deren Ausgänge die Signale anstehen, die aufbereitet werden sollen.

Eine vorteilhafte Vorrichtung weist gegenüber der bekannten Vorrichtung zusätzlich nur die Einrichtung zur Berechnung der komplexen Faktoren, eine Vergleichereinrichtung und zwei weitere Multiplizierer auf. Diese zusätzlichen Elemente können bei einer besonders vorteilhaften Vorrichtung in der Signalverarbeitung integriert sein. Das heißt, die erfindungsgemäße Vorrichtung unterscheidet sich hardwaremäßig nicht von der bekannten Vorrichtung, sondern nur softwaremäßig.

Zur weiteren Erläuterung der Erfindung wird auf die Zeichnung Bezug genommen, in der mehrere Ausführungsbeispiele einer Vorrichtung zur Durchführung des erfindungsgemäßen Verfahrens zur Bestimmung einer Drehzahl einer geberlosen, feldorientiert betriebenen Drehfeldmaschine schematisch veranschaulicht sind.

FIG 1          zeigt ein Blockschaltbild einer ersten Ausführungsform der Vorrichtung zur Durchführung des erfindungsgemäßen Verfahrens, wobei die

FIG 2          ein Blockschaltbild einer zweiten Ausführungsform der Vorrichtung zur Durchführung des erfindungsgemäßen Verfahrens dargestellt, die

FIG 3          zeigt in einem Diagramm den stationären Übertragungsfaktor über der Ständerfrequenzzahl in Abhängigkeit der Rotorfrequenzzahl ohne Verwendung des erfindungsgemäßen Verfahrens, wobei die

FIG 4          in einem Diagramm den stationären Übertragungsfaktor über der Ständerfrequenzzahl in Abhängigkeit der Rotorfrequenzzahl bei Verwendung des erfindungsgemäßen Verfahrens zeigt und in den

FIG 5 bis 8      sind jeweils Blockschaltbilder weiterer Ausführungsformen der Vorrichtung gemäß FIG 2 dargestellt.

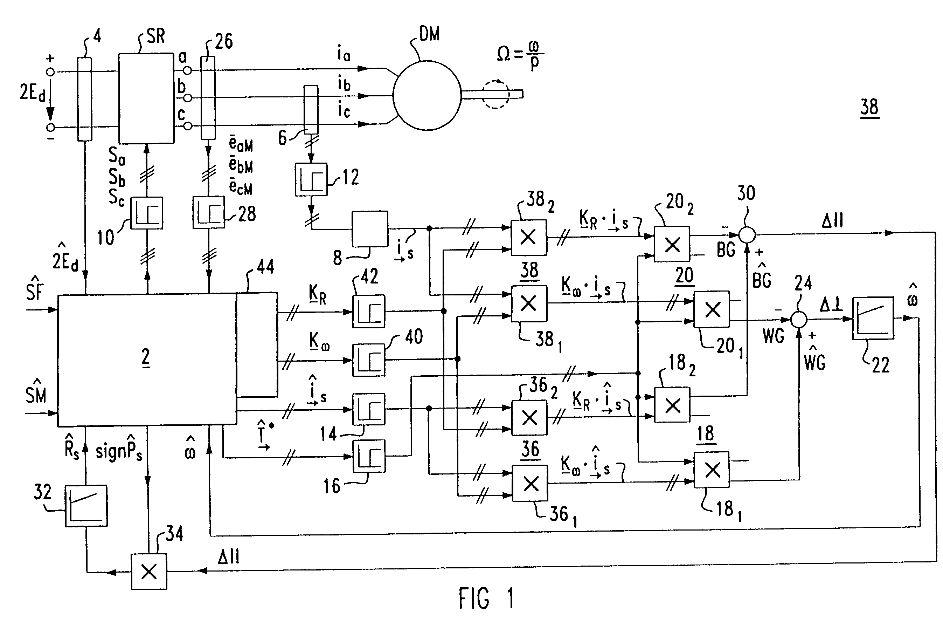

Die FIG 1 zeigt ein Blockschaltbild einer ersten Ausführungsform der Vorrichtung zur Durchführung des erfindungsgemäßen Verfahrens, wobei der überwiegende Teil dieser Ausführung aus der älteren deutschen Patentanmeldung mit dem amtlichen Aktenzeichen 195 31 771.8 bekannt ist. Dieser bekannte Teil umfaßt die Drehfeldmaschine DM, die von einem Pulsstromrichter SR gespeist wird. Eingangsseitig steht am Pulsstromrichter SR eine Gleichspannung $2E_d$, auch als Zwischenkreis-Gleichspannung bezeichnet, an. Der Pulsstromrichter SR erhält von einer Signalverarbeitung 2 Steuersignale $S_a$, $S_b$, $S_c$. Außerdem gehören zum bekannten Teil dieser Vorrichtung Meßglieder 4,6,26, Totzeitglieder 10,12,14,16,28, einen Koordinatenwandler 8, einen ersten und zweiten Multiplizierer 18,20, zwei vergleicher 24,30, zwei Ausgleichsregler 22,32 und einen Multiplizierer 34. Die Signalverarbeitung 2, die unter anderem ein vollständiges Maschinenmodell und einen Modulator enthält, ist ausgangsseitig mittels des Totzeitgliedes 10 mit dem Pulsstromrichter SR, mittels des Totzeitgliedes 14 mit einem Eingang des ersten Multiplizierers 18 und mittels des Totzeitgliedes 16 jeweils mit einem weiteren Eingang des ersten und zweiten Multiplizierer 18,20 verknüpft. Der Koordinatenwandler 8 ist eingangsseitig über das Totzeitglied 12 mit dem Nießglied 6 und Ausgangsseitig mit einem weiteren Eingang des zweiten Multiplizierers 20 verbunden. Eingangsseitig ist die Signalverarbeitung 2 mittels des Totzeitgliedes 28 mit dem Meßglied 26 und direkt mit dem Meßglied 4 verbunden. Außerdem ist die Signalverarbeitung 2 eingangsseitig mit den Ausgleichsregler 22,32 verknüpft, von denen der Ausgleichsregler 22 direkt mit dem Ausgang des Vergleichers 24 und der Ausgleichsregler 32 mittels des Multiplizierers 34 mit dem Ausgang des Vergleichers 30 verbunden sind.

Ferner werden der Signalverarbeitung 2 zwei Sollwerte $\hat{SM}$ und $\hat{SF}$ zugeführt. Die Ausgänge der beiden Multiplizierer 18, 20, an denen die Imaginäranteile WG, $\hat{WG}$ anstehen, sind mit den Eingängen des Vergleichers 24 und die Ausgänge dieser beiden Multiplizierer 18, 20, an denen die Realanteile BG, $\hat{BG}$ anstehen, sind mit den Eingängen des Vergleichers 30 verknüpft. Am Ausgang des Vergleichers 24 steht die Regelabweichung $\Delta\|$ zur Adaption des Systemparameters Rotorwinkelgeschwindigkeit $\hat{\omega}$ und am Ausgang des Vergleichers 30 steht die Regelabweichung $\Delta\|$ zur Adaption des Systemparameters Statorwiderstand $\hat{R}_S$ an.

Die Wirkungsweise dieser bekannten Vorrichtung ist ausführlich in der bereits genannten älteren deutschen Patentanmeldung beschrieben worden, so daß an dieser Stelle darauf verzichtet werden kann.

Diese bekannte Vorrichtung ist nun, wie im folgenden beschrieben wird, zur erfindungsgemäßen Vorrichtung erweitert worden:

Damit diese bekannte Vorrichtung erweitert werden kann, sind der erste und zweite Multiplizierer 18,20 in Teilmultiplizierer $18_1$, $18_2$, $20_1$, $20_2$ unterteilt, von denen jeweils ein Ausgang der Teilmultiplizierer $18_1,20_1$ mit den Eingängen des Vergleichers 24 und jeweils ein Ausgang der Teilmultiplizierer $18_2,20_2$ mit den Eingängen des Vergleichers 30 verbunden sind. Zwischen diesen ersten und zweiten Multiplizierern $18_1,18_2,20_1,20_2$ und dem Totzeitglied 14 bzw. dem Koordinatenwandler 8 sind zwei weitere Multiplizierer 36,38 angeordnet, die jeweils in Teilmultiplierern $36_1$, $36_2$ bzw. $38_1$, $38_2$ unterteilt sind. Die Ausgänge der Teilmultiplizierer $36_1$, $36_2$, bzw. $38_1$, $38_2$ sind jeweils mit einem Eingang der Teilmultiplizierer $18_1$, $18_2$ bzw. $20_1$, $20_2$ verbunden. Die weiteren Eingänge dieser Teilmultiplizierer $18_1$, $18_2,20_1, 20_2$ sind jeweils mit dem Ausgang des Totzeitgliedes 16 verknüpft, an dessen Eingang der konjugiert komplexe Bezugsraumzeiger $\hat{\underrightarrow{T}}^*$ ansteht. Die ersten

Eingänge der Teilmultiplizierer $36_1$, $36_2$ bzw. $38_1$, $38_2$ sind jeweils mit dem Totzeitglied 14 bzw. dem Koordinatenwandler 8 verknüpft, wogegen die zweiten Eingänge dieser Teilmultiplizierer $36_1$, $38_1$ bzw. $36_2$, $38_2$ mittels eines Totzeitgliedes 40 bzw. 42 mit einer Einrichtung 44 zur Berechnung von komplexen Faktoren $\underline{K}_\omega$, $\underline{K}_R$ verbunden sind. An den Ausgängen der Teilmultiplizierer $36_1,36_2$ bzw. $38_1,38_2$ steht jeweils ein aufbereiteter Statorstrom-Modellraumzeiger $\underline{K}_\omega \cdot \hat{\underrightarrow{i}}_s$, $\underline{K}_R \cdot \hat{\underrightarrow{i}}_s$ bzw. ein aufbereiteter Statorstrom-Istraumzeiger $\underline{K}_\omega \cdot \underrightarrow{i}_s$, $\underline{K}_R \cdot \underrightarrow{i}_s$ an, die anschließend mittels des konjugiert komplexen Bezugsraumzeigers $\hat{\underrightarrow{T}}^*$ und der Teilmultiplizierer $18_1$, $18_2$, $20_1$, $20_2$ in das komplexe Bezugssystem transformiert werden. Der Statorstrom-Modellraumzeiger $\hat{\underrightarrow{i}}_s$ und der Statorstrom-Istraumzeiger $\underrightarrow{i}_s$ werden durch die Multiplikation mit den komplexen Faktoren $\underline{K}_\omega$, $\underline{K}_R$ betriebspunktabhängig in ihrer Lage und ihrer Amplitude verändert.

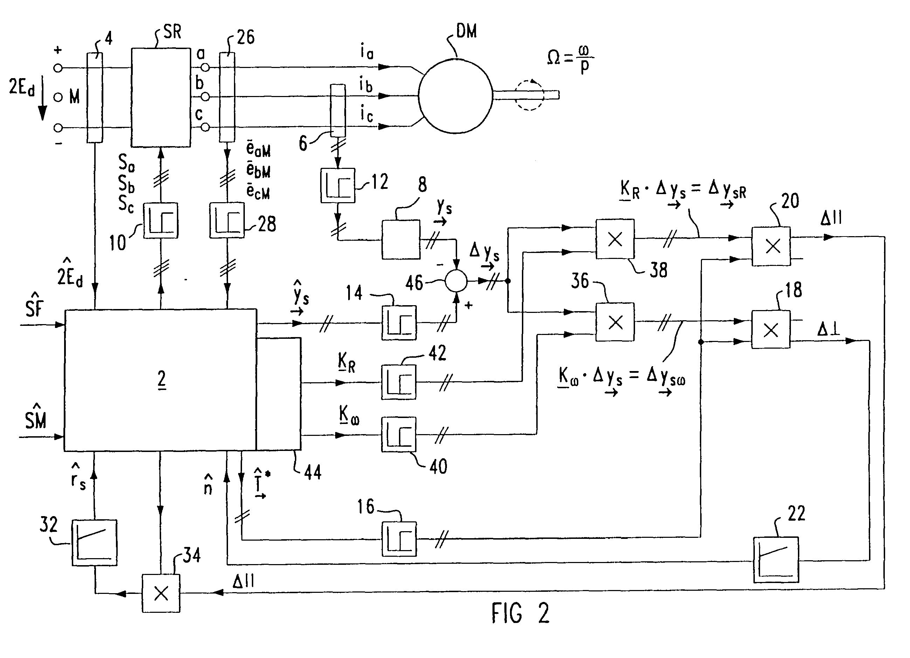

Bei den nachfolgenden Ausführungsformen gemäß den Figuren 2 und 5 bis 8 werden bezogene Größen verwendet. Diese Größen erhält man dadurch, daß durch eine entsprechende Bezugsgröße dividiert wird. Als Bezugsgrößen werden gewählt:

$\Psi_*$     Bezugswert für Flußgrößen, definiert als Betrag des Raumzeigers der Statorflußverkettung bei Betrieb mit Nennfluß

$I_* = \psi_* / L_\sigma$     Bezugswert für Ströme

$\omega_* = \omega_\sigma = R_r / L_\sigma$     Bezugswert für Kreisfrequenzen und

$$T_* = T_\sigma = L_\sigma / R_r = \frac{1}{\omega_{tK}}$$ Winkelgeschwindigkeiten Bezugswert für die Zeit

Diese Bezugsgrößen sind durch den Index * am Formelzeichen gekennzeichnet. Als Formelbuchstaben für bezogene Größen werden gewählt:

$$\Psi \, / \, \Psi_* \qquad = \qquad \psi$$

$$i \, / \, I_* \qquad = \qquad y$$

$$\omega \, / \, \omega_* \qquad = \qquad n$$

$$t \, / \, T_* \qquad = \qquad \tau$$

Die FIG 2 zeigt eine zweite Ausführungsform der Vorrichtung zur Durchführung des erfindungsgemäßen Verfahrens. Diese zweite Ausführungsform ist eine besonders vorteilhafte Ausführungsform, da sie gegenüber der ersten Ausführungsform gemäß FIG 1 aufwandsärmer ist. Bei dieser zweiten Ausführungsform ist der Ausgang des Koordinatenwandlers 8 und des Totzeitgliedes 14 mit den Eingängen einer Vergleichereinrichtung 46 verbunden, deren Ausgang jeweils mit einem Eingang der Multiplizierer 36,38 verbunden ist. Diese Vergleichseinrichtung 46 bildet aus dem anstehenden bezogenen Statorstrom-Modellraumzeiger $\underrightarrow{\hat{Y}}_S$ und dem bezogenen Statorstrom-Istraumzeiger $\underrightarrow{Y}_S$ einen bezogenen Differenzstrom-Raumzeiger $\underrightarrow{Y}_S$, der weiterverarbeitet wird.

Dieser Raumzeiger $\Delta\underrightarrow{Y}_S$ der Differenzen zwischen den Modellströmen und den Maschinenströmen wird unter Berücksichtigung der zeitlichen Verschiebung zwischen den Meßwerten und den zuvor berechneten Modellwerten im v-ten Berechnungsspiel nach folgender Gleichung:

$$\Delta\underrightarrow{Y}_S \, (v) \; = \; \underrightarrow{\hat{Y}}_S \; \left( v - T_\Sigma \, / \, T_C \right) - \underrightarrow{Y}_S \, (v) \qquad\qquad (3)$$

bestimmt. Die resultierende Zeitverschiebung $T_\Sigma$ wird in der FIG 2 durch den Totzeitblock 14 berücksichtigt.

Gegenüber der Ausführungsform gemäß FIG 1 sind hier die Multiplizierer 18,20,36,38 nicht mehr jeweils in zwei Teilmultiplizierer unterteilt. Der zweite Eingang des Multiplizierer 36 ist mit dem Ausgang des Totzeitgliedes 40 verbunden, an dessen Eingang der komplexe Faktor $\underline{K}_\omega$ ansteht. Der zweite Eingang des Multiplizierers 38 ist mit dem Ausgang des Totzeitgliedes 42 verbunden, an dessen Eingang der komplexe Faktor $\underline{K}_R$ ansteht. Am Ausgang des Multiplizierers 36 bzw. 38 steht ein aufbereiteter, bezogener Differenzstrom-Raumzeiger $\Delta\underrightarrow{Y}_{S\omega}$ bzw. $\Delta\underrightarrow{Y}_{SR}$ an, der mittels des konjugiert komplexen Bezugsraumzeigers $\underrightarrow{\hat{T}}^*$ und des Multiplizierers 18 bzw. 20 in das komplexe Bezugssystem transformiert wird. Der Imaginärteil des Mittels des Multiplizierers 18 gebildeten Produkts wird als Regelabweichung $\Delta\|$ zur Adaption der normierten Drehzahl $\hat{n}$ dem Ausgleichsregler 22 zugeführt, wobei der Realteil mittels des Multiplizierers 20 gebildeten Produkts als Regelabweichung $\Delta\|$ zur Adaption des Statorwiderstandes $\hat{r}_S$ über den Multiplizier 34 dem Ausgleichsregler 32 zugeführt wird. Dem Multiplizierer 34 wird von der Signalverarbeitung 2 anstelle des Vorzeichens der Statorleistung nun das Vorzeichen sign $\hat{n}_r \cdot \hat{n}_s$ des Produkts aus der Modell-Rotorfrequenzzahl $\hat{n}_r$ und der Ständerfrequenzzahl $\hat{n}_s$ zugeführt.

Die FIG 3 zeigt in einem Diagramm den stationären Übertragungsfaktor $\tilde{u}$ über der Statorfrequenzzahl $\tilde{n}_s$ in Abhängigkeit der Rotorfrequenzzahl $\tilde{n}_r$. Dieses Diagramm erhält man, wenn in der zweiten Ausführungsform gemäß FIG 2 als konjugiert komplexer Bezugsraumzeiger $\underset{\rightarrow}{\hat{T}}{}^{*}$ der bezogene konjugiert komplexe Rotorflußraumzeiger $\underset{\rightarrow}{\hat{\psi}}{}^{*}_r$ gewählt wird und für den komplexen Faktor $\underline{K}_\omega$ zur Aufbereitung des Differenzstrom-Raumzeigers $\Delta\underset{\rightarrow}{Y}{}_s$ der konstante Wert Eins angenommen wird. Wie diesem Diagramm zu entnehmen ist, ist der stationäre Übertragungsfaktor $\tilde{u}$ im Motorbetrieb und Generatorbetrieb sehr abhängig vom Betriebsparameter Rotorfrequenzzahl $\tilde{n}_r$, wobei bei generatorischem Betrieb mit niedriger Ständerfrequenzzahl $\tilde{n}_s$ dieser Übertragungsfaktor $\tilde{u}$ sein Vorzeichen ändert. Die Betriebsparameter Rotorfrequenzzahl $\tilde{n}_r$ und Ständerfrequenzzahl $\tilde{n}_s$ wird gemäß den Gleichungen:

$$\tilde{n}_r \;=\; \tilde{\omega}_r \cdot \hat{\sigma} \cdot \hat{T}_r \qquad\qquad (4)$$

$$\hat{n}_s \;=\; \tilde{\omega}_s \cdot \hat{\sigma} \cdot \hat{T}_r \qquad\qquad (5)$$

berechnet.

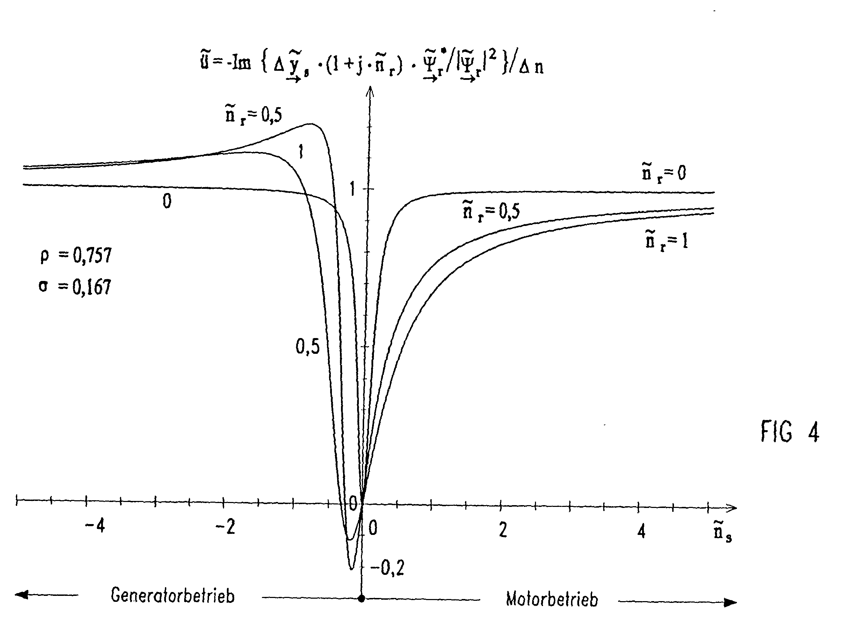

Die FIG 4 zeigt in einem Diagramm den stationären Übertragungsfaktor $\tilde{u}$ über der Ständerfrequenzzahl $\tilde{n}_s$ in Abhängigkeit der Rotorfrequenzzahl $\tilde{n}_r$. Dieses Diagramm erhält man, wenn der komplexe Faktor $\underline{K}_\omega$ gemäß folgender Gleichung:

$$\underline{K}_\omega \;=\; 1 + j \cdot \hat{n}_r \qquad\qquad (6)$$

mittels der Einrichtung 44 zur Berechnung der komplexen Faktoren $\underline{K}_\omega$, $\underline{K}_R$ und des konjugiert komplexen Bezugsraumzeigers $\underset{\rightarrow}{\hat{T}}{}^{*}$ gemäß folgender Gleichung:

$$\underset{\rightarrow}{\hat{T}}{}^{*} \;=\; \underset{\rightarrow r}{\hat{\psi}}{}^{*} \;/\; |\underset{\rightarrow r}{\hat{\psi}}|^{2} \qquad\qquad (7)$$

gewählt wird.

Somit wird die Regelabweichung $\Delta\bot$ zur Adaption der normierten Drehzahl $\hat{n}$ des vollständigen Maschinenmodells der Signalverarbeitung 2 gemäß der Ausführungsform der Vorrichtung nach FIG 2 entsprechend der Beziehung:

$$\Delta\bot \;=\; \operatorname{Im}\left\{ \Delta\underset{\rightarrow}{Y}{}_s \;\cdot\; (1 + j \cdot \hat{n}_r) \;\cdot\; \underset{\rightarrow r}{\hat{\psi}}{}^{*} \;/\; |\underset{\rightarrow r}{\hat{\psi}}|^{2} \right\} \qquad\qquad (8)$$

gebildet.

Durch die Aufbereitung des Differenzstrom-Raumzeigers $\Delta\underset{\rightarrow}{Y}{}_s$ mittels des komplexen Faktors $\underline{K}_\omega$ gemäß der Gleichung (6) wird die Abhängigkeit des stationären übertragungsfaktors $\tilde{u}$ vom Betriebsparameter Rotorfrequenzzahl

$\tilde{n}_r$ erheblich verringert, wie dies das Diagramm nach FIG 4 zeigt. Diesem Diagramm ist jedoch zu entnehmen, daß dieser stationäre Übertragungsfaktor $\tilde{u}$ bei generatorischem Betrieb mit niedriger Ständerfrequenzzahl $\tilde{n}_s$ sein Vorzeichen immer noch wechselt.

Mit einem einfachen PI-Regler, der als Ausgleichsrichter 22 vorgesehen ist, kann in solchen Betriebspunkten die Drehzahldifferenz $\Delta n$ nicht stabil zu Null geregelt werden. Um diesen Nachteil zu beseitigen, wird in einer weiteren Variante des Verfahrens im betreffenden Betriebsgebiet der komplexe Faktor $\underline{K}_\omega$ in der Einrichtung 44 gemäß folgender Gleichung:

$$\underline{K}_\omega \;=\; 1 + j \cdot \hat{n}_r \;/\; \hat{\sigma} \qquad\qquad (9)$$

berechnet.

Die Regelabweichung $\Delta\perp$ wird dann nach folgender Beziehung:

$$\Delta\perp \;=\; \mathrm{Im}\left\{ \underset{\rightarrow}{\Delta y}_s \;\cdot\; (1 + j \cdot \hat{n}_r \;/\; \hat{\sigma}) \;\cdot\; \underset{\rightarrow r}{\hat{\psi}}{}^{*} \;/\; |\,\underset{\rightarrow r}{\hat{\psi}}\,|^2 \right\} \qquad (10)$$

bestimmt.

Der stationäre Übertragungsfaktor $\tilde{u}$ hat jetzt für jede beliebige Kombination der Betriebsparameter $\tilde{n}_s$ und $\tilde{n}_r$ immer ein positives Vorzeichen, allerdings berühren die Kennlinien der FIG 4 dann bei $\tilde{n}_s = 0$ tangential die Null-Linie, d.h., die Regelabweichung $\Delta\perp$ reagiert auf eine Drehzahldifferenz $\Delta n$ nur mit geringer Empfindlichkeit. Dieser Nachteil kann dadurch vermieden werden, wenn in einer weiteren Variante des Verfahrens in der Einrichtung 44 der komplexe Faktor $\underline{K}_\omega$ nach folgender Anweisung:

$$\underline{K}_\omega \;=\; 1 + j \cdot \hat{n}_r \cdot (2 \;/\; \hat{\sigma} - 1) \qquad\qquad (11)$$

bestimmt wird.

Die Regelabweichung $\Delta\perp$ ergibt sich dann nach folgender Beziehung:

$$\Delta\perp \;=\; \mathrm{Im}\left\{ \underset{\rightarrow}{\Delta y}_s \;\cdot\; \left[ 1 + j \cdot \hat{n}_r \cdot (2 \;/\; \hat{\sigma} - 1) \right] \;\cdot\; \underset{\rightarrow r}{\hat{\psi}}{}^{*} \;/\; |\,\underset{\rightarrow r}{\hat{\psi}}\,|^2 \right\} \qquad (12)$$

Bei dieser Variante ergeben sich allerdings bei motorischen Betrieb mit kleinen Statorfrequenzen negative Werte für den stationären Übertragungsfaktor $\tilde{u}$. Aus diesem Grund soll bei motorischem Betrieb, d.h., wenn das Produkt der Betriebsparameter Ständerfrequenzzahl $\tilde{n}_s$ und Rotorfrequenzzahl $\tilde{n}_r$ positiv ist, der komplexe Faktor $\underline{K}_\omega$ immer gemäß der Gleichung (6) in der Einrichtung 44 berechnet werden. Das gleiche gilt, wenn das Vorzeichen von Produkt der Betriebsparameter Ständerfrequenzzahl $\hat{n}_s$ und Rotorfrequenzzahl $\hat{n}_r$ zwar negativ ist, aber der Betrag des Betriebsparameters Ständerfrequenzzahl $\hat{n}_s$ über einen Grenzwert $|\hat{n}_{sE}|$ liegt. Insgesamt können diese Anweisungen zur Benutzung der Gleichung (6) durch binärlogische Verarbeitung folgender Relation realisiert werden:

$$\hat{n}_s \cdot \hat{n}_r > 0 \quad \text{oder} \quad |\hat{n}_s| > |\hat{n}_{sE}|$$

wobei $\qquad\qquad\qquad\qquad\qquad\qquad\qquad\qquad\qquad (13)$

$$\hat{n}_{sE} = - V \cdot \hat{\rho} \cdot \hat{n}_r$$

mit $V > 1$, beispielsweise $V = 1{,}3$

Die Berechnung des komplexen Faktors $\underline{K}_\omega$ wird gemäß der Gleichung (9) bzw. (11) mittels der Einrichtung 44 in Zusammenarbeit mit der Signalverarbeitung 2 nur im Betriebsbereich mit folgender Kennzeichnung:

$$\hat{n}_s \cdot \hat{n}_r < 0 \quad \text{und} \quad 0 < |\hat{n}_s| < |\hat{n}_{sA}|$$

$$\text{wobei} \tag{14}$$

$$\hat{n}_{sA} = \frac{1}{Q \cdot V} \cdot \frac{1 - \hat{\sigma}}{1 + \hat{n}_r^2} \cdot \hat{n}_{sE}$$

mit Q > 1, beispielsweise Q = 2, wenn der komplexe Faktor $\underline{K}_\omega$ gemäß Gleichung (9) und Q = 4, wenn dieser komplexe Faktor $\underline{K}_\omega$ gemäß Gleichung (11) berechnet wird.

Im verbleibenden Bereich mit Werten von $\hat{n}_s$, die zwischen $\hat{n}_{sE}$ und $\hat{n}_{sA}$ liegen, der auch als Überblendbereich bezeichnet wird, wird zur Berechnung des Faktors $\underline{K}_\omega$ weich von der Gleichung (6) zur Gleichung (9) bzw. zur Gleichung (11) übergeblendet. Dazu wird eine immer positive Hilfsgröße $X^2$ verwendet, die nach folgender Anweisung:

$$X^2 = \frac{(\hat{n}_{sE} - \hat{n}_s)^2}{(\hat{n}_{sE} - \hat{n}_{sA})^2} \tag{15}$$

in der Einrichtung 44 in Verbindung mit der Signalverarbeitung 2 bestimmt wird.

In diesem Überblendbereich wird dann der komplexe Faktor $\underline{K}_\omega$ nach folgenden Anweisungen in der Einrichtung 44 bestimmt. Beim Überblenden zwischen den Gleichungen (6) und Gleichung (9) lautet die Anweisung:

$$\underline{K}_\omega = 1 + j \cdot \hat{n}_r \cdot \left[ 1 + X^2 \cdot (1 - \hat{\sigma}) / \hat{\sigma} \right] \tag{16}$$

wobei beim Überblenden zwischen der Gleichung (6) und der Gleichung (11) die Anweisung für die Berechnung des komplexen Faktors $\underline{K}_\omega$ lautet:

$$\underline{K}_\omega = 1 + j \cdot \hat{n}_r \cdot \left[ 1 + X^2 \cdot 2 \cdot (1 - \hat{\sigma}) / \hat{\sigma} \right] \tag{17}$$

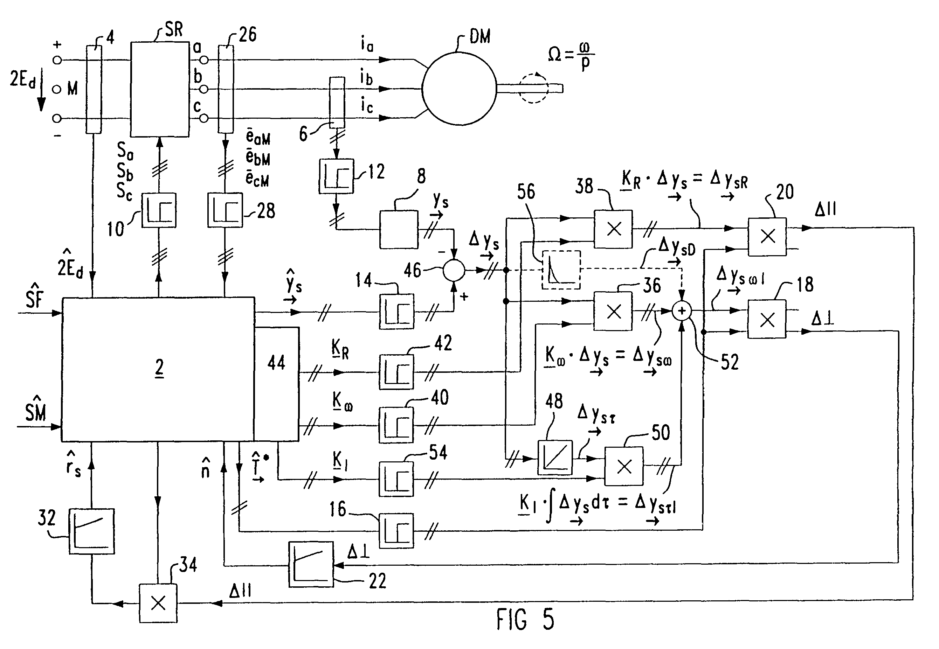

In der FIG 5 ist ein Blockschaltbild einer weiteren Ausführungsform der Vorrichtung zur Durchführung des erfindungsgemäßen Verfahrens dargestellt, wobei diese Ausführungsform von der Ausführungsform der FIG 2 ausgeht. Diese Ausführungsform der Vorrichtung unterscheidet sich von der Ausführungsform der Vorrichtung gemäß FIG 2 dadurch, daß der Ausgang der Vergleichereinrichtung 46 mit einem Eingang eines Integrators 48 verknüpft ist, der ausgangsseitig über einen weiteren Multiplizierer 50 mit einem Addierer 52 verbunden ist. Ein zweiter Eingang des weiteren Multiplizierers 50 ist mit einem Ausgang eines weiteren Totzeitgliedes 54, das eingangsseitig mit der Einrichtung 44 verknüpft ist, verbunden. Der zweite Eingang des Addierer 52 ist mit dem Ausgang des Multiplizierers 36 verbunden, wobei dieser Addierer 52 ausgangsseitig mit einem Eingang des ersten Multiplizierers 18 verbunden ist. Am Eingang des zweiten Totzeitgliedes 54 steht ein komplexer Faktor $\underline{K}_I$ an, mit dessen Hilfe der gebildete Zeitintegralwert $\Delta \overrightarrow{Y}_{s\tau}$ , auch als Differenzstrom-Integral-Raumzeiger $\Delta \overrightarrow{Y}_{s\tau}$ bezeichnet, des Differenzstrom-Raumzeigers $\Delta \overrightarrow{Y}_s$ aufbereitet wird. Dieser aufbereitete Differenzstromintegral-Raumzeiger $\Delta \overrightarrow{Y}_{s\tau I}$ wird dann mittels des Addierers 52 zum aufbereiteten Differenzstrom-Raumzeiger $\Delta$ dazu addiert. Der komplexe Faktor $\underline{K}_I$ wird wie der komplexe Faktor $\underline{K}_\omega$ mittels der Einrichtung 44 in jedem Rechenspiel neu bestimmt. Durch das Totzeitglied 54 wird die Zeitverschiebung von berechneten und meßtechnisch bestimmten Größen berücksichtigt. Der am Ausgang des Addierers 52 anstehende Sum-
men-Raumzeiger $\Delta \underset{\rightarrow}{Y}_{s\omega I}$ wird mittels des ersten Multiplizierers 18 mit dem konjugiert komplexen Bezugsraumzeiger

$\underset{\rightarrow}{\hat{T}}{}^{*}$ multipliziert. Der Imaginärteil dieses Produkts liefert die Regelabweichung $\Delta \mathbb{I}$. Der konjugiert komplexe Bezugsraumzeiger $\underset{\rightarrow}{\hat{T}}{}^{*}$ wird in der Signalverarbeitung 2 unverändert nach der Gleichung (7) gebildet, wogegen der komplexe
Faktor $\underline{K}_{\omega}$ in der Einrichtung 44 in Verbindung mit der Signalverarbeitung 2 gemäß Gleichung (6) berechnet wird. Für
die Bestimmung des zusätzlichen komplexen Faktors $\underline{K}_I$ gilt folgende Anweisung:

$$\underline{K}_I \quad = \quad \hat{\rho} \cdot (\hat{\sigma} + j \cdot \hat{n}_r) \qquad\qquad (18)$$

Die Regelabweichung $\Delta \mathbb{I}$ ergibt sich demnach aus folgender Regel:

$$\Delta \underline{\perp} \quad = \quad Im \left\{ (\Delta \underset{\rightarrow}{Y}_{s\omega} + \Delta \underset{\rightarrow}{Y}_{s\tau I}) \cdot \underset{\rightarrow r}{\hat{\psi}}{}^{*} / | \underset{\rightarrow r}{\hat{\psi}} |^2 \right\}$$

$$mit \qquad\qquad (19)$$

$$\Delta \underset{\rightarrow}{Y}_{s\omega} = \underline{K}_{\omega} \cdot \Delta \underset{\rightarrow}{Y}_{s}$$

$$\Delta \underset{\rightarrow}{Y}_{s\tau I} = \underline{K}_I \cdot \int \Delta \underset{\rightarrow}{Y}_{s} \cdot d\tau$$

Wird die Regelabweichung $\Delta \mathbb{I}$ nach dieser Anweisung (19) bestimmt, dann hat der stationäre Übertragungsfaktor ũ den konstanten Wert Eins, d.h., er hängt nicht mehr von den Betriebs- und Systemparametern ab. Bei dynamischen Übergängen zwischen stationären Betriebspunkten besteht allerdings weiter eine Abhängigkeit des Übertragungsfaktors ü von diesen genannten Parametern.
Werden gemäß einer weiteren Variante des Verfahrens die beiden komplexen Faktoren $\underline{K}_{\omega}$ und $\underline{K}_I$ gemäß der
beiden folgenden Gleichungen:

$$\underline{K}_{\omega} \quad = \quad \hat{\rho} + 1 + j \cdot \hat{n}_r \qquad\qquad (20)$$

und

$$\underline{K}_I \quad = \quad \hat{\rho} \cdot (\hat{\sigma} - j \cdot \hat{n}) \qquad\qquad (21)$$

mit

$$\hat{n} = \hat{\omega} / \omega_*$$

berechnet, so ergibt sich eine Verbesserung des dynamischen Verhaltens, ohne daß sich der stationäre Übertragungsfaktor ũ ändert.
Eine nochmalige Verbesserung des Übertragungsverhaltens in dynamischen Betriebszuständen wird dadurch erreicht, daß zusätzlich die zeitliche Ableitung des Differenzstrom-Raumzeigers $\underset{\rightarrow}{Y}_s$ beim Summen-Raumzeiger $\underset{\rightarrow}{Y}_{s\omega I}$ berücksichtigt wird.

Dazu ist der Ausgang der Vergleichereinrichtung 46 außerdem mit einem Differenzierer 56 verbunden, der ausgangsseitig mit einem weiteren Eingang des Addierers 52 verknüpft ist. Am Ausgang dieses Differenzierers 56 steht nun die zeitliche Ableitung $\Delta\underset{\rightarrow}{Y}_{sD}$ des Differenzstrom-Raumzeigers an, der dem Summen-Raumzeiger $\Delta\underset{\rightarrow}{Y}_{s\omega I}$ aufaddiert wird. Bei dieser Variante werden nun die komplexen Faktoren $\underline{K}_\omega$ und $\underline{K}_I$ in der Einrichtung 44 in Verbindung mit der Signalverarbeitung 2 gemäß den beiden folgenden Regeln

$$\underline{K}_\omega = \hat{\rho} + 1 - j \cdot \hat{n} \qquad\qquad (22)$$

und

$$\underline{K}_I = \hat{\rho} \cdot (\hat{\sigma} - j \cdot \hat{n}) \qquad\qquad (21)$$

bestimmt .

Gegenüber der vorherigen Variante ändert sich nur die Regel zur Bestimmung des komplexen Faktors $\underline{K}_\omega$. Die Anweisung zur Bestimmung der Regelabweichung $\Delta\underline{I}$ lautet demnach:

$$\Delta\underline{I} = \mathrm{Im}\left\{\left[\underbrace{d\Delta\underset{\rightarrow}{y}_s/dt}_{\Delta\underset{\rightarrow}{y}_{sD}} + \underbrace{\Delta\underset{\rightarrow}{y}_s \cdot (\hat{\rho} + 1 - j \cdot \hat{n})}_{\Delta\underset{\rightarrow}{y}_{s\omega}} + \underbrace{(\int \Delta\underset{\rightarrow}{y}_s \cdot dt) \cdot \hat{\rho} \cdot (\hat{\sigma} - j \cdot \hat{n})}_{\Delta\underset{\rightarrow}{y}_{s\pi I}}\right] \cdot \hat{\underset{\rightarrow}{\psi}}_r^* / |\hat{\underset{\rightarrow}{\psi}}_r|^2\right\} \qquad (23)$$

In der Praxis ändert sich die Größe $|\underset{\rightarrow}{\psi}_r|$ normalerweise so langsam, daß ihre zeitliche Ableitung ohne merklichen Fehler vernachlässigt werden kann. Dann liefert die Gleichung (23) nicht nur unter stationären Betriebsbedingungen, sondern ständig den Wert $\Delta n$ und es gilt:

$$\Delta\underline{I} = -\Delta n \qquad \ddot{u} = 1 \qquad \ddot{u} \neq f(\hat{n}_s, \hat{n}_r, \hat{\sigma}, \hat{\rho}, t) \qquad (24)$$

Der Differenzstrom-Raumzeiger $\underset{\rightarrow}{Y}_s$ rotiert unter stationären Betriebsbedingungen mit der Winkelgeschwindigkeit $\hat{\omega}_s$, die recht hohe Werte, beispielsweise $200 \cdot 2\pi$ bis $300 \cdot 2\pi$ Hz, erreichen kann. Die orthogonalen Koordinaten der zeitlichen Ableitung $\Delta\underset{\rightarrow}{Y}_{sD}$ des Differenzstrom-Raumzeigers $\Delta\underset{\rightarrow}{Y}_s$, die mittels des Differenzierers 56 der FIG 5 gebildet werden, sind dann wechselgrößen mit der Kreisfrequenz $\hat{\omega}_s$. Es ist dann schwierig, die dem Nutzsignal überlagerten Störsignale, die aus der Meßkette zur Bestimmung des bezogenen Statorstrom-Istraumzeigers $\underset{\rightarrow}{Y}_s$ stammen, durch Filterung ausreichend abzuschwächen.

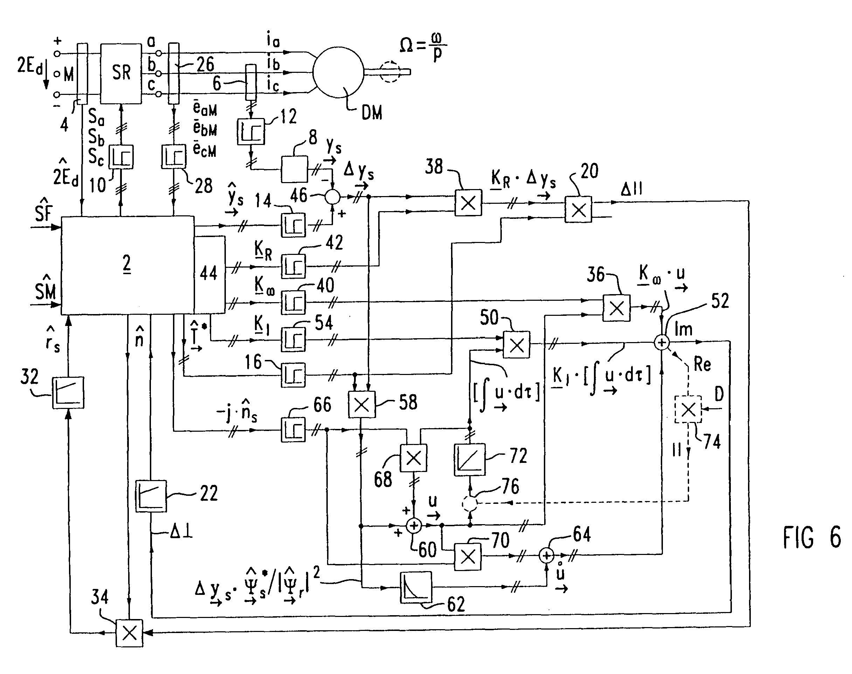

Dieser Nachteil kann durch eine weitere Ausführungsform der Vorrichtung gemäß FIG 6 bedeutend verringert werden. Um dies zu erreichen, werden zusätzlich drei neue Größen benötigt, die nach folgenden Regeln gebildet werden:

$$\left[\int \underset{\rightarrow}{u} \cdot d\tau\right] \approx \left\{\int \Delta \underset{\rightarrow}{y}_s \cdot d\tau\right\} \cdot \hat{\underset{\rightarrow r}{\psi}}^* / |\hat{\underset{\rightarrow r}{\psi}}|^2 \qquad (25)$$

$$\underset{\rightarrow}{u} = (\Delta \underset{\rightarrow}{y}_s \cdot \hat{\underset{\rightarrow r}{\psi}}^* / |\hat{\underset{\rightarrow r}{\psi}}|^2) - j \cdot \hat{n}_s \cdot \left[\int \underset{\rightarrow}{u} \cdot d\tau\right] \qquad (26)$$

$$\overset{\circ}{\underset{\rightarrow}{u}} = d(\Delta \underset{\rightarrow}{y}_s \cdot \hat{\underset{\rightarrow r}{\psi}}^* / |\hat{\underset{\rightarrow r}{\psi}}|^2) / d\tau - j \cdot \hat{n}_s \cdot \underset{\rightarrow}{u} \qquad (27)$$

Unter stationären Bedingungen sind die Größen, die mit den Gleichungen (25) und (26) bestimmt werden, dann zeitlich konstant und die Größe, die mittels der Gleichung (27) ermittelt wird, hat dann den Wert Null. Das den Nutzsignalen überlagerte Störrauschen kann jetzt vergleichsweise einfach durch Tiefpaßfilterung ausreichend abgeschwächt werden.

In der FIG 6 ist ein Blockschaltbild einer weiteren Ausführungsform der Vorrichtung zur Durchführung des erfindungsgemäßen Verfahrens angegeben, wobei die durch die Gleichungen (25), (26) und (27) bestimmten Größen verwendet werden. Bei dieser Ausführungsform ist der Ausgang der Vergleichereinrichtung 46 anstelle mit dem Multiplizierer 36 mit einem weiteren Multiplizierer 58 verbunden, dessen zweiter Eingang mit dem Ausgang des Totzeitgliedes 16 verknüpft ist, an dessen Eingang der konjugiert komplexe Bezugsraumzeiger $\hat{\underset{\rightarrow}{T}}^*$ ansteht.

Der Ausgang dieses Multiplizierers 58 ist einerseits mit einem weiteren Addierer 60 und andererseits mit einem weiteren Differenzierer 62 verbunden, der ausgangsseitig mit einem Eingang eines weiteren Addierers 64 verknüpft ist.

Die Signalverarbeitung 2, die den konjugiert komplexen Bezugsraumzeiger $\hat{\underset{\rightarrow}{T}}^*$ generiert, berechnet ebenfalls die negative imaginäre Ständerfrequenzzahl $-j \cdot \hat{n}_s$. Diese Ständerfrequenzzahl $-j \cdot \hat{n}_s$ gelangt über ein Totzeitglied 66 jeweils zu einem weiteren Multiplizierer 68 und 70. Der Ausgang des Multiplizierers 68 ist mit dem zweiten Eingang des zweiten Addierers 60 verbunden, dessen Ausgang einerseits mit einem weiteren Integrator 72 und andererseits mit dem Multiplizierer 70 verknüpft ist. Der Ausgang dieses Integrators 72 ist einerseits mit dem Multiplizierer 68 und andererseits mit dem Multiplizierer 50 verbunden, an dessen zweiten Eingang der durch das Totzeitglied 54 verzögerte komplexe Faktor $\underline{K}_I$ ansteht. Der Ausgang des Multiplizierers 70 ist mit einem zweiten Eingang des weiteren Addierers 64 verbunden, an dessen Ausgang die Größe $\overset{\circ}{\underset{\rightarrow}{u}}$ ansteht. Am Ausgang des weiteren Addierers 60 steht die Größe $\underset{\rightarrow}{u}$ an, die gemäß Gleichung (26) bestimmt wird, und am Ausgang des weiteren Integrators 72 steht die Größe, die gemäß Gleichung (25) bestimmt wird, an. Die Ausgänge der Multiplizierer 36 und 50 und der Ausgang des weiteren Addierers 64 werden mittels des Addierers 52 miteinander verknüpft. Der Imaginärteil dieser Ausgangsgröße bildet dann die Regelabweichung $\Delta\underline{U}$, die dem Ausgleichsregler 22 zugeführt wird.

Bei dieser Ausführungsform werden die komplexen Faktoren $\underline{K}_\omega$ und $\underline{K}_I$ in der Einrichtung 44 gemäß folgenden Regeln bestimmt :

$$\underline{K}_\omega = \hat{\rho} + 1 + j \cdot (\hat{n}_s + \hat{n}_r) \qquad (28)$$

$$\underline{K}_I = \hat{\rho} \cdot \hat{\sigma} - \hat{n}_s \cdot \hat{n}_r + j \cdot (\hat{n}_s + \hat{\rho} \cdot \hat{n}_r) = \underline{Z} \qquad (29)$$

Die resultierende Anweisung zur Bestimmung der Regelabweichung $\Delta\perp$ lautet demnach:

$$\Delta\perp = \text{Im}\left\{ \overset{\circ}{\underset{\rightarrow}{u}} + \underset{\rightarrow}{u}\cdot\left[\hat{\rho} + 1 + j\cdot(\hat{n}_s + \hat{n}_r)\right] + \left[\int \underset{\rightarrow}{u}\cdot d\tau\right]\cdot\underline{Z}\right\} \qquad (30)$$

Der Realteil Re am zweiten Ausgang des Addierers 52 ist im Idealfall ständig gleich Null. Zur Dämpfung von technisch nicht vermeidbaren Restfehlern kann das zweite skalare Ausgangssignal, d.h., der Realteil Re der komplexen Größe am Ausgang des Addierers 52, mittels eines weiteren Multiplizierers 74 mit einem Dämpfungsfaktor D multipliziert werden. Die Ausgangsgröße ‖ dieses weiteren Multiplizierers 74 wird mittels eines weiteren Addierers 76 der Größe $\underset{\rightarrow}{u}$ überlagert. Das Signal am Ausgang des Multiplizierers 74 besteht formal aus zwei gleichen Koordinaten, weshalb das Ausgangssignal des Multiplizierers 74 durch zwei parallele Striche gekennzeichnet ist. Da der Realteil Re der Ausgangsgröße des Addierers 52 im Idealfall ständig gleich Null ist, ist dieser Zweig mit einer unterbrochenen Linie dargestellt.

Bezüglich der Regelabweichung $\Delta\|$, die aus dem Realteil des Produkts am Ausgang des zweiten Multipliziers 20 gebildet wird, besteht das Problem, daß außerhalb des Betriebsbereiches mit extrem niedriger Statorfrequenz sich die Drehzahlermittlung über den Ausgleichsreglers 22 und die Statorwiderstandsermittlung über den Ausgleichsregler 32 gegenseitig störend beeinflussen können. Im stationären Betrieb kann die Rückwirkung einer Drehzahlabweichung $\Delta$n auf die Regelabweichung $\Delta\|$ erfindungsgemäß dadurch vermieden werden, wenn in der Einrichtung 44 der komplexe Faktor $\underline{K}_R$ nach folgender Anweisung:

$$\underline{K}_R = -j\cdot\underline{Z} = -j\left[\hat{\rho}\cdot\hat{\sigma} - \hat{n}_s\cdot\hat{n}_r + j(\hat{n}_s + \hat{\rho}\cdot\hat{n}_r)\right] \qquad (31)$$

bestimmt wird.

Die Formel zur Bestimmung der Regelabweichung $\Delta\|$ lautet demnach:

$$\Delta\| = \text{Re}\left\{ -\Delta\underset{\rightarrow}{y}_s \cdot j\cdot\underline{Z}\cdot \hat{\underset{\rightarrow}{\psi}}^{*}_r / |\hat{\underset{\rightarrow}{\psi}}_r|^2\right\} \qquad (32)$$

Bei der Anwendung von Gleichung (32) ist als Eingangssignal zur Korrektur des Regelsinns, daß dem Multiplizierer 34 zugeführt wird, die Größe sign $\hat{n}_r$ aus der Signalverarbeitung 2 zu entnehmen.

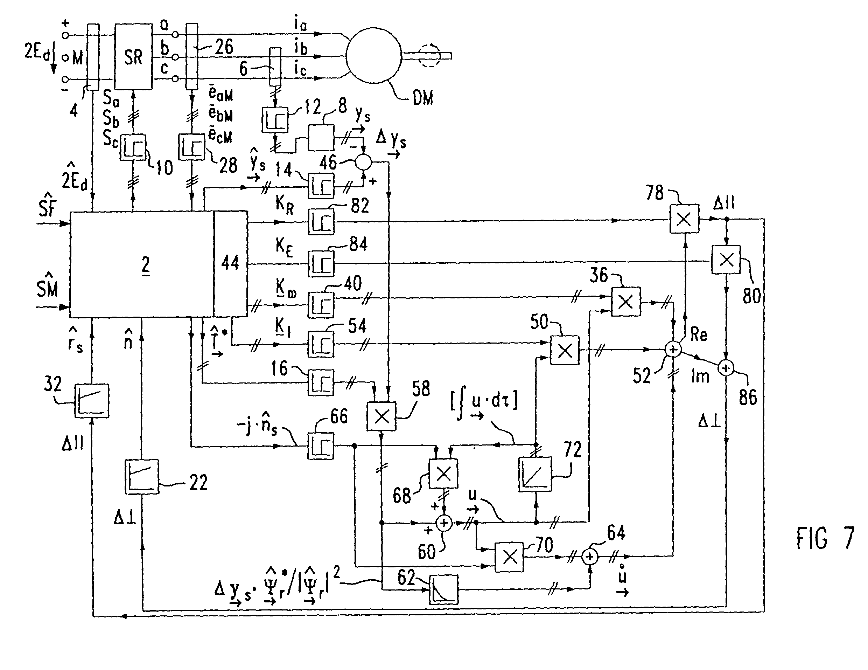

In der FIG 7 ist ein Blockschaltbild einer weiteren Ausführungsform der Vorrichtung dargestellt, die sich von der Ausführungsform gemäß FIG 6 dadurch unterscheidet, daß anstelle der Multiplizierer 38, 20 und des Totzeitgliedes 42 nun zwei weitere Multiplizierer 78, 80 und zwei Totzeitglieder 82,84 vorgesehen sind. Der Ausgang des Totzeitgliedes 82 ist mit einem ersten Eingang des Multiplizierers 78 verbunden, dessen zweiter Eingang mit dem zweiten Ausgang des Addierers 52 verknüpft ist, an dem der Realteil Re der komplexen Größe am Ausgang des Addierers 52 ansteht. Ausgangsseitig ist dieser Multiplizierer 78 einerseits mit dem Eingang des Ausgleichsreglers 32 und andererseits mit einem Eingang des Multiplizierers 80 verbunden, dessen zweiter Eingang mit dem Ausgang des Totzeitgliedes 84 verbunden ist. Ausgangsseitig ist dieser Multiplizierer 80 mit einem weiteren Addierer 86 verknüpft, an dessen zweiten Eingang der Imaginärteil Im der komplexen Ausganggröße des Addierers 52 ansteht. Die Ausgangsgröße dieses Addierers 86 ist die Regelabweichung $\Delta\perp$ zur Adaption des Modellparameters $\hat{n}$. Die Totzeitglieder 82,84 sind eingangsseitig mit den Ausgängen der Einrichtung 44 verbunden, an denen der reelle Faktor $K_R$ und der reelle Entkopplungsfaktor $K_E$ anstehen. In der Einrichtung 44 sind in Zusammenarbeit mit der Signalverarbeitung 2 die benötigten Aufbereitungsfaktoren $K_R$, $K_B$, $\underline{K}_\omega$, $\underline{K}_I$ nach folgenden Anweisungen:

$$K_R = \hat{n}_s \cdot (1 - \hat{\sigma})^2 / (2\cdot\hat{\sigma}\cdot\hat{n}_r) \qquad (33)$$

$$K_E \;=\; (\hat{\sigma} - \hat{n}_r^2) \,/\, \left[\hat{n}_s \cdot (1 - \hat{\sigma})^2\right] \tag{34}$$

$$\underline{K}_\omega \;=\; \hat{\rho} + 1 + j \cdot (\hat{n}_s + \hat{n}_r) \tag{35}$$

$$\underline{K}_I \;=\; \underline{Z} \;=\; \hat{\rho} \cdot \hat{\sigma} - \hat{n}_s \cdot \hat{n}_r + j \cdot (\hat{n}_s + \hat{\rho} \cdot \hat{n}_r) \tag{36}$$

berechnet. Die Regelabweichungen $\Delta\perp$ und $\Delta\|$ werden demnach gemäß folgender Regeln:

$$\Delta\| \;=\; \mathrm{Re}\left\{\overset{\circ}{\underset{\rightarrow}{u}} + \underset{\rightarrow}{u} \cdot \underline{K}_\omega + \left[\int \underset{\rightarrow}{u} \cdot d\tau\right] \cdot \underline{K}_I\right\} \cdot K_R \tag{37}$$

und

$$\Delta\perp \;=\; \mathrm{Im}\left\{\overset{\circ}{\underset{\rightarrow}{u}} + \underset{\rightarrow}{u} \cdot \underline{K}_\omega + \left[\int \underset{\rightarrow}{u} \cdot d\tau\right] \cdot \underline{K}_I\right\} + \Delta\| \cdot K_E \tag{38}$$

gebildet.

Mittels dieser Ausführungsform können die Ausregelungen von den Regelabweichungen $\Delta\|$ und $\Delta\|$ nicht nur stationär, sondern auch dynamisch voll entkoppelt werden.

Eine stationär sehr gute, dynamisch hinreichende Entkopplung der Ausregelungen von den Regelabweichungen $\Delta\perp$ und $\Delta\|$ ist auch ohne Integration der durch die Gleichung (26) definierten Größe $\underset{\rightarrow}{u}$ bzw. der Größe entsprechend der Gleichung (25) möglich.

In diesem Fall lauten die Anweisungen zur Bestimmung der Aufbereitungstaktoren $K_R$, $K_E$ und $\underline{K}_\omega$ wie folgt :

$$K_R \;=\; \hat{n}_s \cdot (1 - \hat{\sigma})^2 \,/\, (2 \cdot \hat{\sigma} \cdot \hat{n}_r) \tag{33}$$

$$K_E \;=\; (\hat{\sigma} - \hat{n}_r^2) \,/\, \left[\hat{n}_s \cdot (1 - \hat{\sigma})^2\right] \tag{34}$$

und

$$\underline{K}_\omega \;=\; 1 + \hat{\rho} \cdot \hat{n}_r \,/\, \hat{n}_s - j \cdot \left[\hat{\rho} \cdot \hat{\sigma} \,/\, \hat{n}_s - \hat{n}_r\right] \tag{39}$$

Die Regelabweichungen $\Delta\|$ und $\Delta\|$ werden dann gemäß folgender Regeln gebildet:

$$\Delta\| \;=\; \mathrm{Re}\left\{\overset{\circ}{\underset{\rightarrow}{v}} + \underset{\rightarrow}{v} \cdot \underline{K}_\omega\right\} \cdot K_R \tag{40}$$

und

$$\Delta\perp \;=\; \mathrm{Im}\left\{\overset{\circ}{\underset{\rightarrow}{v}} + \underset{\rightarrow}{v}\cdot \underline{K}_\omega\right\} + \Delta\| \cdot K_E \tag{41}$$

mit

$$\underset{\rightarrow}{v} = (\Delta\underset{\rightarrow}{y}_s \cdot \underset{\rightarrow r}{\hat{\psi}}{}^* / |\underset{\rightarrow r}{\hat{\psi}}|^2)\,; \qquad \overset{\circ}{\underset{\rightarrow}{v}} = \frac{\mathrm{d}\,\underset{\rightarrow}{v}}{\mathrm{d}\tau}$$

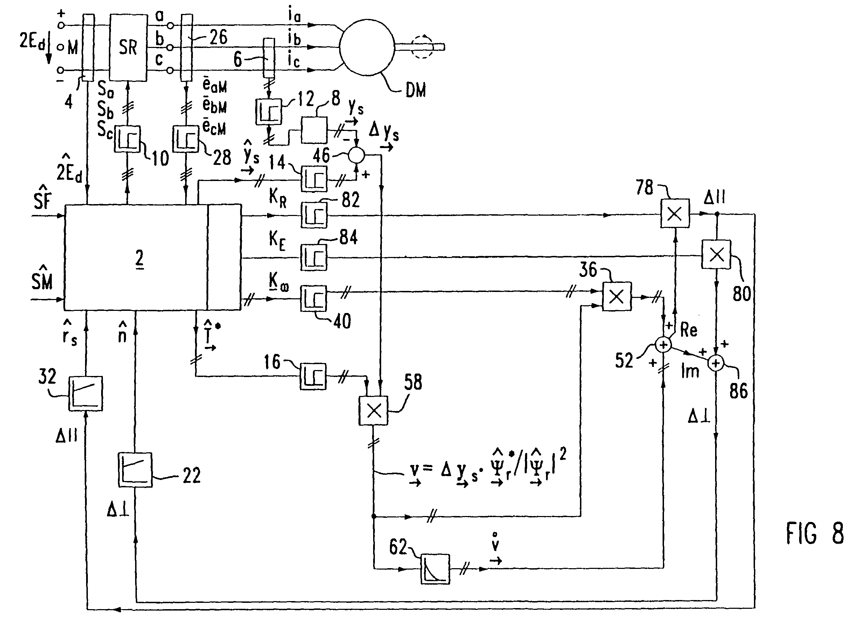

Die FIG 8 zeigt ein Blockschaltbild einer dementsprechenden Ausführungsform, die durch Weglassen folgender Elemente aus der Ausführungsform gemäß FIG 7 entstanden ist:

Totzeitglieder 54 und 66, Multiplizierer 50, 68 und 70, Integrator 72 und Addierer 60 und 64.

Zu beachten ist, da bei den Gleichungen (33) bis (41) die Betriebsparameter Ständerfrequenzzahl $\tilde{n}_s$ und Rotorfrequenzzahl $\tilde{n}_r$ auch als Faktoren im Nenner von Brüchen vorkommen, sind diese Größen vor den entsprechenden Divisionen auf Minimalwerte zu begrenzen.

Durch die Verwendung des Aufbereitungsfaktors $\underline{K}_\omega$ für den Scatorstrom-Modellraumzeiger $\underset{\rightarrow}{\hat{i}}{}^s$, dem Statorstrom-Istraumzeiger $\underset{\rightarrow}{i}{}^s$ oder den bezogenen Differenzstrom-Raumzeigers $\underset{\rightarrow}{Y}{}^s$ kann die Abhängigkeit des stationären Übertragungsfaktors ü von dem Betriebsparameter Rotorfrequenzzahl $\tilde{n}_r$ wesentlich vermindert werden. Durch die Verwendung aller Aufbereitungfaktoren $\underline{K}_\omega$, $\underline{K}_R$ und $K_E$, $K_R$ kann der Übertragungsfaktor ü für stationäre und dynamische Betriebsbedingungen den konstanten Wert Eins aufweisen, wobei die Ausregelungen der Regelabweichungen $\Delta\perp$ und $\Delta\|$ auch dynamisch voll entkoppelt sind.

**Patentansprüche**

1. Verfahren zur Bestimmung einer Rotorwinkelgeschwindigkeit ($\omega$) einer geberlosen, feldorientiert betriebenen Drehfeldmaschine (DM), wobei in Abhängigkeit eines Fluß-Sollwertes ($\hat{SF}$), eines Drehmoment-Sollwertes ($\hat{SM}$), eines eingangsseitig am Pulsstromrichter (SR) der Drehfeldmaschine (DM) anstehenden Gleichspannungswertes ($2E_d$), gemessener Stromrichter-Ausgangsspannungswerte ($\overline{e}_{aM}$, $\overline{e}_{bM}$, $\overline{e}_{cM}$) und Systemparameter ($\hat{L}_\mu$, $\hat{L}_\sigma$, $\hat{R}_s$, $\hat{R}_r / \hat{L}_\sigma$, $\hat{\omega}$) einerseits Stromrichter-Steuersignale ($S_a$, $S_b$, $S_c$) und andererseits ein Statorstrom-Modellraumzeiger ($\underset{\rightarrow}{\hat{i}}{}^s$) und ein konjugiert komplexer Bezugsraumzeiger ($\underset{\rightarrow}{\hat{T}}{}^*$) berechnet werden, wobei dieser ermittelte Statorstrom-Modellraumzeiger ($\underset{\rightarrow}{\hat{i}}{}^s$) und ein ermittelter Statorstrom-Istraumzeiger ($\underset{\rightarrow}{\hat{i}}{}^s$) zur Transformation in ein feldorientiertes, komplexes Bezugssystem jeweils mit dem berechneten konjugiert komplexen Bezugsraumzeiger ($\underset{\rightarrow}{\hat{T}}{}^*$) multipliziert und in einen Real- und Imaginäranteil (BG, $\hat{BG}$, WG, $\hat{WG}$) des komplexen Bezugssystem aufgespalten und diese Imaginäranteile (WG, $\hat{WG}$) miteinander verglichen werden und eine daraus ermittelte Regelabweichung ($\Delta\perp$) zur Verstellung des Systemparameters Rotorwinkelgeschwindigkeit ($\hat{\omega}$) derart verwendet wird, daß diese Regelabweichung ($\Delta\perp$) zu Null wird, **dadurch gekennzeichnet, daß** vor der Transformation der Statorstrom-Modellraumzeiger ($\underset{\rightarrow}{\hat{i}}{}^s$) und -Istraumzeiger ($\underset{\rightarrow}{\hat{i}}{}^s$) in das komplexe Bezugssystem diese Raumzeiger ($\underset{\rightarrow}{\hat{i}}{}^s$, $\underset{\rightarrow}{\hat{i}}{}^s$) mit einem betriebs-

punktabhängig veränderlichen komplexen Faktor $\underline{K}_\omega$ multipliziert werden, und daß als Bezugsraumzeiger ( $\overset{\hat{T}}{\rightarrow}$ ) ein normierter Rotorflußraumzeiger ( $\overset{\hat{\psi}_r}{\rightarrow}$ ) geteilt durch sein Betragsquadrat ( $\overset{|\hat{\psi}_r|^2}{\rightarrow}$ ) vorgesehen ist.

2.  Verfahren nach Anspruch 1, **dadurch gekennzeichnet, daß** die Statorstrom-Modellraumzeiger ( $\overset{\hat{i}_s}{\rightarrow}$ ) und -Istraumzeiger ( $\overset{i_s}{\rightarrow}$ ) jeweils normiert werden und diese normierten Raumzeiger ( $\overset{\hat{Y}_s}{\rightarrow}$ , $\overset{Y_s}{\rightarrow}$ ) miteinander verglichen werden und ein daraus ermittelter bezogener Differenzstrom-Raumzeiger ( $\Delta\overset{Y_s}{\rightarrow}$ ) mit dem komplexen Faktors $\underline{K}_\omega$ multipliziert wird und daß nach der Transformation dieses aufbereiteten, bezogenen Differenzstrom-Raumzeigers ( $\Delta\overset{Y_{s\omega}}{\rightarrow}$ ) in das komplexe Bezugssystem sein Imaginäranteil die Regelabweichung ($\Delta\hat{I}$) bildet.

3.  Verfahren nach Anspruch 1, **dadurch gekennzeichnet, daß** der ermittelte bezogene Differenzstrom-Raumnzeiger ( $\Delta\overset{Y_s}{\rightarrow}$ ) zur Transformation in ein komplexes Bezugssystem mit dem berechneten konjugiert komplexen Bezugsraumzeiger ( $\overset{\hat{T}^*}{\rightarrow}$ ) multipliziert wird, daß eine gebildete negative imaginäre Ständerfrequenz ($-j\hat{n}_s$) einerseits mit einem gebildeten zusätzlichen Raumzeiger ( $\overset{u}{\rightarrow}$ ) und andererseits mit einem gebildeten Zeitintegral dieses zusätzlichen Raumzeigers multipliziert wird, daß dieser zusätzliche Raumzeiger ( $\overset{u}{\rightarrow}$ ) die Summe des transformierten bezogenen Differenzstrom-Raumzeigers und des Produkts aus negativer imaginärer Ständerfrequenz ($-j\hat{n}_s$) und dem gebildeten Zeitintegral ist, daß das Produkt aus zusätzlichem Raumzeiger ( $\overset{u}{\rightarrow}$ ) und der negativen imaginären Ständerfrequenz ($-j\hat{n}_s$) einer zeitlichen Ableitung des transformierten bezogenen Differenzstrom-Raumzeigers aufsummiert wird, daß der zusätzliche Raumzeiger ( $\overset{u}{\rightarrow}$ ) mit dem betriebspunktabhängig veränderlichen komplexen Faktor $\underline{K}_\omega$ und dessen Zeitintegral mit dem betriebspunktabhängig veränderlichen komplexen Faktor $\underline{K}_I$ multipliziert werden und daß diese beiden aufbereiteten Raumzeiger und der gebildete Summen-Raumzeiger ( $\overset{\overset{\circ}{u}}{\rightarrow}$ ) zu einem überlagerungs-Raumzeiger addiert werden, dessen Imaginärteil (Im) die Regelabweichung ($\Delta\hat{I}$) zur Verstellung des Systemparameters Rotorwinkelgeschwindigkeit ($\hat{\omega}$) bildet.

4.  Verfahren nach Anspruch 1, **dadurch gekennzeichnet, daß** vor einer parallel durchgeführten, weiteren Transformation der Statorstrom-Modellraumzeiger ( $\overset{\hat{i}_s}{\rightarrow}$ ) und -Istraumzeiger ( $\overset{i_s}{\rightarrow}$ ) in das komplexe Bezugssystem diese Raumzeiger ( $\overset{\hat{i}_s}{\rightarrow}$ , $\overset{i_s}{\rightarrow}$ ) derart mit einem weiteren komplexen betriebspunktabhängig veränderlichen Faktor $\underline{K}_R$ multipliziert werden, daß als Bezugsraumzeiger ( $\overset{\hat{T}}{\rightarrow}$ ) ein normierter Rotorflußraumzeiger ( $\overset{\hat{\psi}_r}{\rightarrow}$ ) geteilt durch sein Betragsquadrat ( $\overset{|\hat{\psi}_r|^2}{\rightarrow}$ ) vorgesehen ist, und daß die Realanteile des Transformationsergebnisses (BG, $\hat{BG}$) miteinander verglichen werden und eine daraus ermittelte Regelabweichung ($\Delta\hat{I}$) zur verstellung des Systemparameters Statorwiderstand ($\hat{R}_S$) derart verwendet wird, daß diese ermittelte Regelabweichung ($\Delta\hat{I}$) zu Null wird.

5. Verfahren nach Anspruch 1 oder 2, **dadurch gekennzeichnet, daß** der betriebspunktabhängig veranderliche komplexe Faktor $\underline{K}_\omega$ gemäß folgender Gleichung:

$$\underline{K}_\omega \;=\; 1 + j \cdot \hat{n}_r$$

mit

$\hat{n}_r$ = normierte Winkelgeschwindigkeit des normierten Rotorflußraumzeigers $\overset{\hat{\psi}_r}{\longrightarrow}$ im rotorfesten Bezugssystem (Betriebsparameter)

berechnet wird.

6. Verfahren nach Anspruch 1 oder 2 , **dadurch gekennzeichnet, daß** der komplexe Faktor $\underline{K}_\omega$ gemäß folgender Gleichung:

$$\underline{K}_\omega \;=\; 1 + j \cdot \hat{n}_r \;/\; \hat{\sigma}$$

mit

$\hat{n}_r$ = normierte Winkelgeschwindigkeit des normierten Rotorflußraumzeigers im rotorfesten Bezugssystem (Betriebsparameter)
$\hat{\sigma}$ = Streufaktor der Drehfeldmaschine (Systemparameter)

berechnet wird.

7. Verfahren nach Anspruch 1 oder 2, **dadurch gekennzeichnet, daß** der komplexe Faktor $\underline{K}_\omega$ gemäß folgender Gleichung:

$$K_\omega \;=\; 1 + j \cdot \hat{n}_r \cdot (2 \;/\; \hat{\sigma} - 1)$$

mit

$\hat{n}_r$ = normierte Winkelgeschwindigkeit des normierten Rotorflußraumzeigers im rotorfesten Bezugssystem (Betriebsparameter)
$\hat{\sigma}$ = Streufaktor der Drehfeldmaschine (Systemparameter)

berechnet wird.

8. Verfahren nach Anspruch 1 oder 2, **dadurch gekennzeichnet, daß** der komplexe Faktor $\underline{K}_\omega$ gemäß der Gleichung des Anspruchs 5 bei motorischen Betrieb berechnet wird.

9. Verfahren nach Anspruch 1 oder 2, **dadurch gekennzeichnet, daß** der komplexe Faktor $\underline{K}_\omega$ gemäß der Gleichung des Anspruchs 5 berechnet wird, wenn folgendes gilt:

$$|\,\hat{n}_s| \geq |\,\hat{n}_{sE}|$$

wobei

$$\hat{n}_{sE} = -V \cdot \hat{\rho} \cdot \hat{n}_r \text{ und } V > 1$$

mit

$\hat{n}_s$ = normierte Winkelgeschwindigkeit des normierten Rotorflußraumzeigers $\vec{\hat{\psi}}_r$ im statorfesten Bezugssystem (Betriebsparameter)

$\hat{n}_r$ = normierte Winkelgeschwindigkeit des normierten Rotorflußraumzeigers $\vec{\hat{\psi}}_r$ im rotorfesten Bezugssystem (Betriebsparameter)

$\hat{\rho}$ = Verhältnis Rotorzeitkonstante zu Ständerzeitkonstante der Drehfeldmaschine (Systemparameter)

$\hat{n}_{sE}$ = normierter Grenzwert (Endwert) eines Überblendbereichs

V = Konstante

**10.** Verfahren nach Anspruch 1 oder 2, **dadurch gekennzeichnet, daß** der komplexe Faktor $\underline{K}_\omega$ gemäß der Gleichung des Anspruchs 6 bzw. 7 berechnet wird, wenn folgendes gilt:

$$\hat{n}_s \cdot \hat{n}_r < 0 \text{ und } 0 < |\hat{n}_s| < |\hat{n}_{sA}|$$

wobei

$$\hat{n}_{sA} = \frac{1}{Q \cdot V} \cdot \frac{1 - \hat{\sigma}}{1 + \hat{n}_r^2} \cdot \hat{n}_{sE} \text{ und } Q > 1$$

mit

$\hat{n}_s$ = normierte Winkelgeschwindigkeit des normierten Rotorflußraumzeigers $\vec{\hat{\psi}}_r$ im statorfesten Bezugssystem (Betriebsparameter)

$\hat{n}_r$ = normierte Winkelgeschwindigkeit des normierten Rotorflußraumzeigers $\vec{\hat{\psi}}_r$ im rotorfesten Bezugssystem (Betriebsparameter)

$\hat{n}_{sA}$ = normierter Grenzwert (Anfangswert) eines Überblendbereichs

$\hat{\sigma}$ = Streufaktor der Drehfeldmaschine

$\hat{n}_{sE}$ = normierter Grenzwert (Endwert) eines Überblendbereichs

Q,V = Konstante

**11.** Verfahren nach Anspruch 1 oder 2 , **dadurch gekennzeichnet, daß** der komplexe Faktor $\underline{K}_\omega$ im Überblendbereich gemäß folgender Gleichung:

$$\underline{K}_\omega = 1 + j \cdot \hat{n}_r \cdot \left[ 1 + X^2 \cdot (1 - \hat{\sigma})/\hat{\sigma} \right]$$

wobei

$$X^2 = \frac{(\hat{n}_{sE} - \hat{n}_s)^2}{(\hat{n}_{sE} - \hat{n}_{sA})^2}$$

mit

$\hat{n}_s$ = normierte Winkelgeschwindigkeit des normierten Rotorflußraumzeigers $\underset{\rightarrow}{\hat{\psi}_r}$ im statorfesten Bezugssystem (Betriebsparameter)

$\hat{n}_r$ = normierte Winkelgeschwindigkeit des normierten Rotorflußraumzeigers $\underset{\rightarrow}{\hat{\psi}_r}$ im rotorfesten Bezugssystem (Betriebsparameter)

$\hat{n}_{sA}$ , $\hat{n}_{sE}$ = normierter Grenzwert (Anfangs- und Endwert) des Überblendbereichs

$\hat{\sigma}$ = Streufaktor der Drehfeldmaschine

berechnet wird.

**12.** Verfahren nach Anspruch 1 oder 2, **dadurch gekennzeichnet, daß** der komplexe Faktor $\underline{K}_\omega$ im Überblendbereich gemäß folgender Gleichung:

$$\underline{K}_\omega \;=\; 1 + j \cdot \hat{n}_r \cdot \left[ 1 + X^2 \cdot 2 \cdot (1 - \hat{\sigma}) / \hat{\sigma} \right]$$

wobei

$$X^2 \quad = \quad \frac{(\hat{n}_{sE} - \hat{n}_s)^2}{(\hat{n}_{sE} - \hat{n}_{sA})^2}$$

mit

$\hat{n}_s$ = normierte Winkelgeschwindigkeit des normierten Rotorflußraumzeigers $\underset{\rightarrow}{\hat{\psi}_r}$ im statorfesten Bezugssystem (Betriebsparameter)

$\hat{n}_r$ = normierte Winkelgeschwindigkeit des normierten Rotorflußraumzeigers $\underset{\rightarrow}{\hat{\psi}_r}$ im rotorfesten Bezugssystem (Betriebsparameter)

$\hat{n}_{sA}$, $\hat{n}_{sE}$ = normierter Grenzwert (Anfangs- und Endwert) des Überblendbereichs

$\hat{n}$ = Streufaktor der Drehfeldmaschine

berechnet wird.

**13.** Verfahren nach Anspruch 2, **dadurch gekennzeichnet, daß** ein normierter Zeitintegralwert ($\Delta \underset{\rightarrow}{Y_{s\tau}}$) des bezogenen Differenzstrom-Raumzeigers ($\Delta \underset{\rightarrow}{Y_s}$) gebildet wird, der mit einem betriebspunktabhängig veränderlichen komplexen Faktor $\underline{K}_I$ multipliziert wird, daß dieser aufbereitete Differenzstromintegral-Raumzeiger ($\Delta \underset{\rightarrow}{Y_{s\tau I}}$) dem aufbereiteten, bezogenen Differenzstrom-Raumzeiger $(\underset{\rightarrow}{\Delta Y_{s\omega}})$ aufaddiert wird und daß dieser komplexe Faktor ($\underline{K}_I$) gemäß folgender Gleichung:

$$\underline{K}_I \quad = \quad \hat{\rho} \cdot (\hat{\sigma} + j \cdot \hat{n}_r)$$

mit

$\hat{\rho}$ = Verhältnis Rotorzeitkonstante zu Ständerzeitkonstante der Drehfeldmaschine
$\hat{\sigma}$ = Streufaktor der Drehfelcimaschine

$\hat{n}_r$ = normierte Winkelgeschwindigkeit des normierten Rotorflußraumzeigers $\overset{\hat{\psi}_r}{\rightarrow}$ im rotorfesten Bezugssystem (Betriebsparameter)

berechnet wird.

**14.** Verfahren nach Anspruch 13, **dadurch gekennzeichnet, daß** die betriebspunktabhängig veränderlichen komplexen Faktoren $\underline{K}_\omega$ und $\underline{K}_I$ zur Aufbereitung des bezogenen Differenzstrom-Raumzeigers ($\overset{Y_s}{\rightarrow}$) und seines normierten Zeitintegralwertes ($\overset{Y_{s\tau}}{\rightarrow}$) gemäß folgenden Gleichungen:

$$\underline{K}_\omega \;\; = \;\; \hat{\rho} \; + \; 1 \; + \; j \cdot \hat{n}_r$$

und

$$\underline{K}_I \;\; = \;\; \hat{\rho} \cdot (\hat{\sigma} - j \cdot \hat{n})$$

wobei

$$\hat{n} \; = \; \hat{\omega} \; / \; \omega_*$$

mit

$\hat{\rho}$ = Verhältnis Rotorzeitkonstante zu Ständerzeitkonstante der Drehfeldmaschine
$\hat{\sigma}$ = Streufaktor der Drehfeldmaschine

$\hat{n}_r$ = normierte Winkelgeschwindigkeit des normierten Rotorflußraumzeigers $\overset{\hat{\psi}_r}{\rightarrow}$ im rotorfesten Bezugssystem (Betriebsparameter)

$\hat{n}$ = normierte Differenz der Winkelgeschwindigkeit des normierten Rotorrlußraumseigers $\overset{\hat{\psi}_r}{\rightarrow}$ im statorfesten und im rotorfesten Bezugssystem
$\hat{\omega}$ = Modellwert: der Winkelgeschwindigkeit des Rotors der Drehfeldmaschine
$\omega_*$ = Bezugswert der Winkelgeschwindigkeit

berechnet werden.

**15.** Verfahren nach Anspruch 13, **dadurch gekennzeichnet, daß** eine normierte zeitliche Ableitung ($\Delta\overset{Y_{sD}}{\rightarrow}$) des bezogenen Differenzstrom-Raumzeigers ($\Delta\overset{Y_s}{\rightarrow}$) gebildet und der Summe des aufbereiteten bezogenen Differenz-stromintegral-Raumzeigers ($\Delta\overset{Y_{s\tau I}}{\rightarrow}$) und des aufbereiteten Differenzstrom-Raumzeigers $\overset{(\Delta Y_{s\omega})}{\rightarrow}$ aufaddiert wird und daß die betriebspunktabhängig veränderlichen komplexen Faktoren $\underline{K}_\omega$ und $\underline{K}_I$ zur Aufbereitung des be-zogenen Differenzstrom-Raumzeigers ($\overset{Y_s}{\rightarrow}$) und seines normierten Zeitintegralwertes ($\Delta\overset{Y_{s\tau}}{\rightarrow}$) gemäß folgenden Gleichungen:

$$\underline{K}_\omega \;=\; \hat{\rho} \;+\; 1 \;-\; j \cdot \hat{n}$$

und

$$\underline{K}_I \;=\; \hat{\rho} \cdot (\hat{\sigma} - j \cdot \hat{n})$$

wobei

$$\hat{n} \;=\; \hat{\omega} \;/\; \omega_*$$

mit

$\hat{\rho}$ = Verhältnis Rotorzeitkonstante zu Ständerzeitkonstante der Drehfeldmaschine

$\hat{\sigma}$ = Streufaktor der Drehfeldmaschine

$\hat{n}$ = normierte Differenz der Winkelgeschwindigkeit des normierten Rotorflußraumzeigers $\underset{\rightarrow}{\hat{\psi}}_r$ im statorfesten und im rotorfesten Bezuassystem

$\hat{\omega}$ = Modellwert der Winkelgeschwindigkeit des Rotors der Drehfeldmaschine

$\omega_*$ = Bezugswert der Winkelgeschwindigkeit

berechnet werden.

16. Verfahren nach Anspruch 3, **dadurch gekennzeichnet, daß** der zusätzliche Raumzeiger ( $\underset{\rightarrow}{u}$ ) gemäß folgender Gleichung:

$$\underset{\rightarrow}{u} \;=\; (\Delta \underset{\rightarrow}{y}_s \cdot \underset{\rightarrow r}{\hat{\psi}^*} \,/\, |\underset{\rightarrow r}{\hat{\psi}}|^2 ) \;-\; j \cdot \hat{n}_s \cdot \left[\int \underset{\rightarrow}{u} \cdot d\tau \right]$$

berechnet wird.

17. Verfahren nach Anspruch 3, **dadurch gekennzeichnet, daß** der Summen-Raumzeiger ( $\underset{\rightarrow}{\overset{\circ}{u}}$ ) gemäß folgender Gleichung:

$$\underset{\rightarrow}{\overset{\circ}{u}} \;=\; d(\Delta \underset{\rightarrow}{y}_s \cdot \underset{\rightarrow r}{\hat{\psi}^*} \,/\, |\underset{\rightarrow r}{\hat{\psi}}|^2 ) \,/\, d\tau \;-\; j \cdot \hat{n}_s \cdot \underset{\rightarrow}{u}$$

berechnet wird.

18. Verfahren nach Anspruch 3, **dadurch gekennzeichnet, daß** das gebildete Zeitintegral des zusätzlichen Raumzeigers ( $\underset{\rightarrow}{u}$ ) gemäß folgender Gleichung:

$$\left[\int \underset{\rightarrow}{u} \cdot d\tau \right] \;\approx\; \left\{\int \Delta \underset{\rightarrow}{y}_s \cdot d\tau \right\} \cdot \underset{\rightarrow r}{\hat{\psi}^*} \,/\, |\underset{\rightarrow r}{\hat{\psi}}|^2$$

berechnet wird.

**19.** Verfahren nach Anspruch 3, **dadurch gekennzeichnet, daß** der betriebspunktabhängig veränderliche komplexe Faktor $\underline{K}_\omega$ gemäß folgender Gleichung:

$$\underline{K}_\omega \;=\; \hat{\rho} + 1 + j \cdot (\hat{n}_s + \hat{n}_r)$$

mit

$\hat{\rho}$ = Verhältnis Rotorzeitkonstante zu Ständerzeitkonstante der Drehfeldmaschine

$\hat{n}_s$ = normierte Winkelgeschwindigkeit, des normierten Rotorflußraumzeigers $\underline{\hat{\Psi}}_r$ im statorfesten Bezugssystem (Betriebsparameter)

$\hat{n}_r$ = normierte Winkelgeschwindigkeit des normierten Rotorflußraumzeigers $\underline{\hat{\Psi}}_r$ im rotorfesten Bezugssystem (Betriebsparameter)

berechnet wird.

**20.** Verfahren nach Anspruch 3, **dadurch gekennzeichnet, daß** der betriebspunktabhängig veränderliche komplexe Faktor $\underline{K}_I$ gemäß folgender Gleichung:

$$\underline{K}_I \;=\; \hat{\rho} \cdot \hat{\sigma} - \hat{n}_s \cdot \hat{n}_r + j \cdot (\hat{n}_s + \hat{\rho} \cdot \hat{n}_r) = \underline{Z}$$

mit

$\hat{\rho}$ = Verhältnis Rotorzeitkonstante zu Ständerzeitkonstante der Drehfeldmaschine
$\hat{\sigma}$ = Streufaktor der Drehfeldmaschine

$\hat{n}_s$ = normierte Winkelgeschwindigkeit des normierten Rotorflußraumzeigers $\underline{\hat{\Psi}}_r$ im statorfesten Bezugssystem (Betriebsparameter)

$\hat{n}_r$ = normierte Winkelgeschwindigkeit des normierten Rotorflußraumzeigers $\underline{\hat{\Psi}}_r$ im rotorfesten Bezugssystem (Betriebsparameter)

berechnet wird.

**21.** Verfahren nach Anspruch 2, **dadurch gekennzeichnet, daß** der ermittelte Differenzstrom-Raumzeiger ($\Delta \underline{Y}_s$) mit einem weiteren betriebspunktabhängig veränderlichen komplexen Faktor $\underline{K}_R$ multipliziert wird und daß nach der Transformation dieses aufbereiteten Differenzstrom-Raumzeigers ($\Delta \underline{Y}_{sR}$) in das komplexe Bezugssystem sein Realanteil die Regelabweichung ($\Delta \parallel$) bildet.

**22.** Verfahren nach Anspruch 4 oder 21, **dadurch gekennzeichnet, daß** der weitere betriebspunktabhängig veränderliche komplexe Faktor $\underline{K}_R$ gemäß folgender Gleichung:

$$\underline{K}_R \;=\; -j \cdot \underline{Z}$$

wobei

$$\underline{Z} = \hat{\rho} \cdot \hat{\sigma} - \hat{n}_s \cdot \hat{n}_r + j \cdot (\hat{n}_s + \hat{\rho} \cdot \hat{n}_r)$$

mit

$\hat{\rho}$ = Verhältnis Rotorzeitkonstante zu Ständerzeitkonstante der Drehfeldmaschine

$\hat{\sigma}$ = Streufaktor der Drehfeldmaschine

$\hat{n}_s$ = normierte Winkelgeschwindigkeit des normierten Rotorflußraumzeigers $\vec{\hat{\psi}}_r$ im statorfesten Bezugssystem (Betriebsparameter)

$\hat{n}_r$ = normierte Winkelgeschwindigkeit des normierten Rotorflußraumzeigers $\vec{\hat{\psi}}_r$ im rotorfesten Bezugssystem (Betriebsparameter)

berechnet wird.

**23.** Verfahren nach Anspruch 3, **dadurch gekennzeichnet, daß** durch Multiplikation mit einem gebildeten reellen Faktor $K_R$ aus einem Realteil (Re) des erzeugten Überlagerungs-Raumzeigers eine Regelabweichung ($\Delta\|$) zur Verstellung des Systemparameters Statorwiderstand ($\hat{R}_s$) bestimmt wird, die mit einem reellen Entkopplungsfaktor $K_E$ multipliziert dem Imaginärteil (Im) des gebildeten Überlagerungs-Raumzeigers aufaddiert wird.

**24.** Verfahren nach Anspruch 23, **dadurch gekennzeichnet, daß** der reelle Faktor $K_R$ gemäß folgender Gleichung:

$$K_R = \hat{n}_s \cdot (1 - \hat{\sigma})^2 / (2 \cdot \hat{\sigma} \cdot \hat{n}_r)$$

mit

$\hat{\sigma}$ = Streufaktor der Drehfeldmaschine

$\hat{n}_r$ = normierte Winkelgeschwindigkeit des normierten Rotorflußraumzeigers $\vec{\hat{\psi}}_r$ im rotorfesten Bezugssystem (Betriebsparameter)

berechnet wird.

**25.** Verfahren nach Anspruch 23, **dadurch gekennzeichnet, daß** der reelle Entkopplungsfaktor $K_E$ gemäß folgender Gleichung:

$$K_E = (\hat{\sigma} - \hat{n}_r^2) / \left[\hat{n}_s \cdot (1 - \hat{\sigma})^2\right]$$

mit

$\hat{\sigma}$ = Streufaktor der Drehfeldmaschine

$\hat{n}_r$ = normierte Winkelgeschwindigkeit des normierten Rotorflußraumzeigers $\vec{\hat{\psi}}_r$ im rotorfesten Bezugssystem (Betriebsparameter)

$\hat{n}_s$ = normierte Winkelgeschwindigkeit des normierten Rotorflußraumzeigers $\vec{\hat{\psi}}_r$ im statorfesten Bezugssystem (Betriebsparameter)

berechnet wird.

**26.** Verfahren nach Anspruch 3, **dadurch gekennzeichnet, daß** die zeitliche Ableitung des transformiert bezogenen Differenzstrom-Raumzeigers ($\overset{v}{\rightarrow}$) und der mit dem betriebspunktabhängig veränderlichen komplexen Faktor $\underline{K}_\omega$ multiplizierte transformierte bezogene Differenzstrom-Raumzeiger ($\overset{v}{\rightarrow}$) addiert werden, dessen Realteil (Re) mit einem reellen Faktor $K_R$ multipliziert wird und dieses Produkt ($\Delta\|$) mit einem reellen Entkopplungsfaktor $K_\varepsilon$ multipliziert wird, dessen Produkt dem Imaginärteil (Im) aufaddiert wird, und daß das eine Produkt ($\Delta\|$) zur Verstellung des Systemparameters Statorwiderstand ($\hat{R}_s$) und das andere Produkt zur Verstellung der normierten Drehzahl ($\hat{n}$) des Maschinenmodells verwendet werden.

**27.** Verfahren nach Anspruch 26, **dadurch gekennzeichnet, daß** der reelle Faktor $K_R$ gemäß folgender Gleichung:

$$K_R \;=\; \hat{n}_s \cdot (1 - \hat{\sigma})^2 \;/\; (2 \cdot \hat{\sigma} \cdot \hat{n}_r)$$

mit

$\hat{\sigma}$ = Streufaktor der Drehfeldmaschine

$\hat{n}_r$ = normierte Winkelgeschwindigkeit des normierten Rotorflußraumzeigers $\overset{\hat{\psi}_r}{\rightarrow}$ im rotorfesten Bezugssystem (Betriebsparameter)

$\hat{n}_s$ = normierte Winkelgeschwindigkeit des normierten Rotorflußraumzeigers $\overset{\hat{\psi}_r}{\rightarrow}{}_r$ im statorfesten Bezugssystem (Betriebsparameter)

berechnet wird.

**28.** Verfahren nach Anspruch 26, **dadurch gekennzeichnet, daß** der reelle Entkopplungsfaktor $K_E$ gemäß folgender Gleichung:

$$K_E \;=\; (\hat{\sigma} - \hat{n}_r^2) \;/\; \left[\hat{n}_s \cdot (1 - \hat{\sigma})^2\right]$$

mit

$\hat{\sigma}$ = Streufaktor der Drehfeldmaschine

$\hat{n}_r$ = normierte Winkelgeschwindigkeit des normierten Rotorflußraumzeigers $\overset{\hat{\psi}_r}{\rightarrow}$ im rotorfesten Bezugssystem (Betriebsparameter)

$\hat{n}_s$ = normierte Winkelgeschwindigkeit des normierten Rotorflußraumzeigers $\overset{\hat{\psi}_r}{\rightarrow}$ im statorfesten Bezugssystem (Betriebsparameter)

berechnet wird.

**29.** Verfahren nach Anspruch 26, **dadurch gekennzeichnet, daß** der betriebspunktabhängig veränderliche komplexe Faktor ($\underline{K}_\omega$) gemäß folgender Gleichung:

$$\underline{K}_\omega \;=\; 1 + \hat{\rho} \cdot \hat{n}_r \;/\; \hat{n}_s - j \cdot \left[\hat{\rho} \cdot \hat{\sigma} \;/\; \hat{n}_s - \hat{n}_r\right]$$

mit

$\hat{\rho}$ = Verhältnis Potorzeitkonstante zu Ständerzeitkonstante der Drehfeldmaschine

$\hat{\sigma}$ = Streufaktor der Drehfeldmaschine

$\hat{n}_r$ = normierte Winkelgeschwindigkeit des normierten Rotorflußraumzeigers $\overset{\hat{\psi}_r}{\rightarrow}$ im rotorfesten Bezugssystem (Betriebsparameter)

$\hat{n}_s$ = normierte Winkelgeschwindigkeit des normierten Rotorflußraumzeigers $\overset{\hat{\psi}_r}{\rightarrow}$ im statorfesten Bezugssystem (Betriebsparameter)

berechnet wird.

30. Verfahren nach Anspruch 4 oder 21, **dadurch gekennzeichnet, daß** die ermittelte Regelabweichung ($\Delta\|$) mit einem Vorzeichen (sign $\hat{n}_r$) multipliziert wird.

31. Vorrichtung zur Durchführung des Verfahrens nach Anspruch 1 mit einer Signalverarbeitung (2), die ein vollständiges Maschinenmodell und eine Einrichtung zur Generierung von Steuersignalen ($S_a$, $S_b$, $S_c$) enthält, mit einem ersten und zweiten Multiplizierer (18,20), mit einem Strom-Meßglied (6) mit nachgeschalteten Koordinatenwandler (8), mit einem Vergleicher (24,30) und mit einem Ausgleichsregler (22), **dadurch gekennzeichnet , daß** der Signalverarbeitung (2) eine Einrichtung (44) zur Berechnung von komplexen Faktoren $\underline{K}_\omega$ und $\underline{K}_R$ nachgeschaltet ist, daß dem Koordinatenwandler (8) ein Istwert-Multiplizierer ($38_i$) nachgeschaltet ist, der ausgangsseitig mit einem ersten Eingang des zweiten Multiplizierers ($20_1$) verknüpft ist, daß dem Ausgang der Signalverarbeitung (2), an dem ein Statorstrom-Modellraumzeiger ($\overset{\hat{i}_s}{\rightarrow}$) ansteht, ein Sollwert-Multiplizierer ($36_1$) nachgeschaltet ist, der ausgangsseitig mit einem ersten Eingang des ersten Multiplizierers ($18_1$) verknüpft ist, daß ein Ausgang der Einrichtung (44) zur Berechnung der komplexen Faktoren $\underline{K}_\omega$ und $\underline{K}_R$, an dem der komplexe Faktor $\underline{K}_\omega$ ansteht, jeweils mit einem zweiten Eingang des Sollwert- und Istwert-Multiplizierers ($36_1$, $38_1$) verbunden ist, daß ein weiterer Ausgang der Signalverarbeitung (2), an dem der konjugiert komplexe Bezugsraumzeiger ($\overset{\hat{T}^*}{\rightarrow}$) ansteht, mit einem zweiten Eingang des ersten und zweiten Multiplizierers ($18_1$, $20_1$) verbunden ist und daß die Ausgänge der Multiplizier ($18_1$, $20_1$), an dem die Imaginäranteile ($\hat{WG}$, WG) anstehen, mit dem Vergleicher (24) verknüpft sind, der ausgangsseitig über den Ausgleichsregler (22) mit einem Parametereingang der Signalverarbeitung (2) verknüpft ist.

32. Vorrichtung zur Durchführung des Verfahrens nach Anspruch 1 und 2 mit einer Signalverarbeitung (2), die ein vollständiges Maschinenmodell und eine Einrichtung zur Generierung von Steuersignalen ($S_a$, $S_b$, $S_c$) enthält, mit einem ersten und zweiten Multiplizierer (18,20), mit einem Strom-Meßglied (6) mit nachgeschalteten Koordinatenwandler (8) und mit einem Ausgleichsregler (22), **dadurch gekennzeichnet, daß** der Ausgang des Koordinatenwandlers (8) und der Ausgang der Signalverarbeitung (2), an dem ein Statorstrom-Modellraumzeiger ($\overset{\hat{i}_s}{\rightarrow}$) ansteht, mit einer Vergleichereinrichtung (46) verbunden sind, die ausgangsseitig jeweils mit einem ersten Eingang eines Sollwert- und Istwert-Multiplizieres (36,38) verknüpft ist, daß der Signalverarbeitung (2) eine Einrichtung (44) zur Berechnung von komplexen Faktoren $\underline{K}_\omega$ und $\underline{K}_R$ nachgeschaltet ist, deren Ausgänge jeweils mit einem zweiten Eingang des Sollwert- und Istwert-Multiplizierers (36, 38) verbunden sind, daß die Ausgänge der dieser Sollwert- und Istwert-Multiplizier (36, 38) mit einem ersten Eingang des ersten und zweiten Multiplizierers (18,20) verknüpft sind, wogegen ein zweiter Eingang dieser Multiplizier (18,20) mit einem Ausgang der Signalverarbeitung (2), an dem der konjugiert komplexe Bezugsraumzeiger ($\overset{\hat{T}^*}{\rightarrow}$) ansteht, verbunden ist und daß ein Ausgang des ersten Multiplizierers (18), an dem die Regelabweichung ($\Delta\bot$) ansteht, mittels des Ausgleichsreglers (22) mit einem Parametereingang der Signalverarbeitung (2) verknüpft ist.

33. Vorrichtung nach Anspruch 31, **dadurch gekennzeichnet, daß** dem Koordinatenwandler (8) ein zweiter Istwert-Multiplizierer ($38_2$) nachgeschaltet ist, der ausgangsseitig mit einem ersten Eingang des zweiten Multiplizierers

$(20_2)$ verknüpft ist, daß dem Ausgang der Signalverarbeitung (2), an dem ein Statorstrom-Modellraumzeiger ($\underset{\rightarrow}{\hat{i}}{}_s$) ansteht, ein zweiter Sollwert-Multiplizierer $(36_2)$ nachgeschaltet ist, der ausgangsseitig mit einem ersten Eingang des ersten Multiplizierers $(18_2)$ verknüpft ist, daß die Ausgänge der Signalverarbeitung (2), an denen die komplexen Faktoren $\underline{K}_\omega$ und $\underline{K}_R$ anstehen, jeweils mit einem zweiten Eingang des Sollwert- und Istwert-Multiplizierers $(36_2, 38_2)$ verbunden sind, daß ein weiterer Ausgang der Signalverarbeitung (2), an dem der konjugiert komplexe Be-zugsraumzeiger ($\underset{\rightarrow}{\hat{T}}{}^*$) ansteht, mit einem zweiten Eingang des ersten und zweiten Multiplizierers $(18_2, 20_2)$ ver-bunden ist, und daß die Ausgänge der Multiplizierer $(18_2, 20_2)$, an denen die Realanteile (BG,BG) anstehen, mit einem weiteren Vergleicher (30) verknüpft sind, der ausgangsseitig über einen weiteren Ausgleichsregler (32) mit einem weiteren Parametereingang der Signalverarbeitung (2) verknüpft ist.

**34.** Vorrichtung nach Anspruch 32, **dadurch gekennzeichnet, daß** der Ausgang des zweiten Multiplizierers (20), an dem die Regelabweichung ($\Delta\|$) ansteht, mittels eines weiteren Ausgleichsreglers (32) mit einem weiteren Parametereingang der Signalverarbeitung (2) verknüpft ist.

**35.** Vorrichtung nach Anspruch 33 oder 34, **dadurch gekennzeichnet, daß** dem weiteren Ausgleichsregler (32) ein Multiplizierer (34) vorgeschaltet ist, dessen zweiter Eingang mit einem Ausgang der Signalverarbeitung (2) verknüpft ist, an dem ein Vorzeichensignal (sign $\hat{n}_r$) ansteht.

**36.** Vorrichtung nach Anspruch 32, **dadurch gekennzeichnet, daß** die Vergleichereinrichtung (46) ausgangsseitig mit einem Integrator (48) verknüpft ist, der ausgangsseitig über einen weiteren Multiplizierer (50) mit einem Addierer (52) verbunden ist, dessen erster Eingang mit dem Sollwert-Multiplizierer (36) und dessen Ausgang mit einem ersten Eingang des ersten Multiplizierers (18) verknüpft sind, und daß ein zweiter Eingang des weiteren Multiplizierers (50) mit einem Ausgang der Einrichtung (44) zur Berechnung der komplexen Faktoren $\underline{K}_\omega$, $\underline{K}_R$ und $\underline{K}_I$, an dem der komplexe Faktor $\underline{K}_I$ ansteht, verbunden ist.

**37.** Vorrichtung nach Anspruch 32 und 36, **dadurch gekennzeichnet, daß** die Vergleichereinrichtung (46) ausgangsseitig mit einem Differenzierer (56) verknüpft ist, der ausgangsseitig mit einem weiteren Eingang des Addierers (52) verbunden ist.

**38.** Vorrichtung nach Anspruch 32, **dadurch gekennzeichnet, daß** die Vergleichereinrichtung (46) ausgangsseitig mit einem ersten Eingang eines weiteren Multiplizierers (58) verbunden ist, dessen zweiter Eingang mit einem Ausgang der Signalverarbeitung (2) verknüpft ist, an dem der konjugiert komplexe Bezugsraumzeiger ($\underset{\rightarrow}{\hat{T}}{}^*$) ansteht, und dessen Ausgang einerseits mit einem weiteren Addierer (60) und andererseits mit einem Differenzierer (62) verbunden ist, dessen Ausgang mit einem Eingang eines weiteren Addierers (64) verknüpft ist, daß ein Ausgang der Signalverarbeitung (2), an dem eine negative imaginäre Ständerfrequenzzahl ($-j\hat{n}_s$) ansteht, jeweils mit einem ersten Eingang zweier weiterer Multiplizierer (68, 70) verbunden ist, wobei ein zweiter Eingang des weiteren Multiplizierers (70) mit dem Ausgang des weiteren Addierers (60) und der Ausgang dieses weiteren Multiplizierers (70) mit dem weiteren Addierer (64) verknüpft sind, daß der Ausgang des weiteren Addierers (60) einerseits mit einem Eingang eines Integrators (72) und andererseits mit einem ersten Eingang des Sollwert-Multiplizierers (36) verbunden ist, wobei der Ausgang dieses Integrators (72) einerseits mit einem zweiten Eingang des weiteren Multiplizierers (68) und andererseits mit einem ersten Eingang eines Multiplizierer (50) verknüpft ist, dessen zweiter Eingang mit einem Ausgang der Einrichtung (44) verbunden ist, an dem ein komplexer Faktor $\underline{K}_I$ ansteht, und daß die Ausgänge des Multiplizierers (50), des Sollwert-Multiplizierers (36) und des Addierers (64) mit Eingängen eines Addierers (52) verbunden sind, dessen zweiter Ausgang mit dem Ausgleichsregler (22) verknüpft ist.

**39.** Vorrichtung nach Anspruch 38, **dadurch gekennzeichnet, daß** der zweite Ausgang des Addierers (52) mittels eines weiteren Addierers (86) mit dem Ausgleichsregler (22) verbunden ist, daß ein erster Ausgang dieses Addierers (52) mit einem ersten Eingang eines Multiplizierers (78) verknüpft ist, dessen zweiter Eingang mit einem Ausgang der Einrichtung (44), an dem ein reeller Faktor $K_R$ ansteht, und dessen Ausgang einerseits mit einem Eingang eines Multiplizierers (80) und andererseits mit dem weiteren Ausgleichsregler (32) verbunden sind, und daß der zweite Eingang des Multiplizierers (80) mit einem Ausgang der Einrichtung (44), an dem ein reeller Entkopplungsfaktor $K_E$ ansteht, und sein Ausgang mit dem Addierer (86) verknüpft sind.

**40.** Vorrichtung nach Anspruch 32, **dadurch gekennzeichnet, daß** die Vergleichseinrichtung (46) ausgangsseitig mit einem ersten Eingang eines weiteren Multiplizierers (58) verbunden ist, dessen zweiter Eingang mit einem Ausgang der Signalverarbeitung (2) verknüpft ist, an dem der konjugiert komplexe Bezugsraumzeiger ($\overset{\hat{}}{\underset{\rightarrow}{T}}{}^{*}$) ansteht, und dessen Ausgang einerseits mit einem Differenzierer (62) und andererseits mit einem ersten Eingang des Sollwert-Multiplizierers (36) verbunden ist, daß die Ausgänge des Differenzierers (62) und des Sollwert-Multiplizierers (36) mit Eingängen eines Addierers (52) verknüpft sind, wobei der zweite Eingang des Sollwert-Multiplizierers (36) mit einem Ausgang der Einrichtung (44), an dem der komplexe Faktor $\underline{K}_\omega$ ansteht, verbunden ist, daß ein erster Ausgang des Addierers (52) mit einem ersten Eingang eines Multiplizierers (78) verknüpft ist, dessen zweiter Eingang mit einem Ausgang der Einrichtung (44), an dem ein reeller Faktor $K_R$ ansteht, und dessen Ausgang einerseits mit einem Eingang eines Multiplizierers (80) und andererseits mit dem weiteren Ausgleichsregler (32) verbunden sind, und daß der zweite Eingang des Multiplizierers (80) mit einem Ausgang der Einrichtung (44), an dem ein reeller Entkopplungsfaktor $K_E$ ansteht, und sein Ausgang mit dem Addierer (86) verknüpft sind.

## Claims

**1.** Method of determining the angular velocity of a rotor ($\omega$) of a polyphase machine (DM) operated by field orientation without a transmitter, where a flux setpoint $(\hat{SF})$, a torque setpoint $(\hat{SM})$, a DC voltage value ($2E_d$) applied to the input of the pulse power converter (SR) of the polyphase machine (DM), measured power converter output voltage values $(\overline{e}_{aM}, \overline{e}_{bM}, \overline{e}_{cM})$ and system parameters $(\hat{L}_\mu, \hat{L}_\sigma, \hat{R}_s, \hat{R}_r/\hat{L}_\sigma, \hat{\omega})$ are taken as a basis for calculating firstly power converter control signals ($S_a$, $S_b$, $S_c$) and secondly a stator current model space vector $(\overset{\cdot}{\underset{\rightarrow}{i}}{}_s)$ and a conjugated complex reference space vector $(\hat{\underline{T}}{}^{*})$, this resultant stator current model space vector $(\overset{\hat{}}{\underset{\rightarrow}{i}}{}_s)$ and a resultant stator current real space vector $(\overset{\hat{}}{\underset{\rightarrow}{i}}{}_s)$ being multiplied, for the purpose of transformation to a field-oriented, complex reference system, by the respective calculated conjugated complex reference space vector $(\hat{\underline{T}}{}^{*})$ and being split into real and imaginary components $(\mathbf{BG}, \hat{BG}, \mathbf{WG}, \hat{WG})$ of the complex reference system, and these imaginary components $(\mathbf{WG}, \hat{WG})$ being compared with one another and a resultant system deviation $(\triangle\perp)$ being used to adjust the angular velocity of a rotor $(\hat{\omega})$ system parameter such that this system deviation $(\triangle\perp)$ becomes zero, **characterized in that** before the stator current model space vector $(\overset{\hat{}}{\underset{\rightarrow}{i}}{}_s)$ and the stator current real space vector $(\overset{\cdot}{\underset{\rightarrow}{i}}{}_s)$ are transformed to the complex reference system these space vectors $(\overset{\hat{}}{\underset{\rightarrow}{i}}{}_s, \overset{\cdot}{\underset{\rightarrow}{i}}{}_s)$ are multiplied by a complex factor $\underline{K}_\omega$ which varies as a function of operating point, and **in that** the reference space vector $(\hat{\underline{T}})$ provided is a normalized rotor flux space vector $(\overset{\hat{}}{\underset{\rightarrow}{\Psi}}{}_r)$ divided by the square of its modulus $(|\overset{\hat{}}{\underset{\rightarrow}{\Psi}}{}_r|^2)$.

**2.** Method according to Claim 1, **characterized in that** the stator current model space vector $(\overset{\hat{}}{\underset{\rightarrow}{i}}{}_s)$ and the stator current real space vector $(\overset{\cdot}{\underset{\rightarrow}{i}}{}_s)$ are respectively normalized and these normalized space vectors $(\overset{\hat{}}{\underset{\rightarrow}{y}}{}_s, \underset{\rightarrow}{y}{}_s)$ are compared with one another and a resultant normalized differential current space vector $(\Delta\underline{y}{}_s)$ is multiplied by the complex factor $\underline{K}_\omega$, and **in that** when this processed, normalized differential current space vector $(\Delta\underline{y}{}_{s\omega})$ has been transformed to the complex reference system its imaginary component forms the system deviation $(\triangle\perp)$.

**3.** Method according to Claim 1, **characterized in that** the resultant normalized differential current space vector $(\Delta\underline{y}{}_s)$ is multiplied by the calculated conjugated complex reference space vector $(\hat{\underline{T}}{}^{*})$ in order to transform it to a complex reference system, **in that** a negative imaginary stator frequency $(-j\hat{n}_s)$ formed is multiplied firstly by an additional

space vector **($\underline{u}$)** formed and secondly by a time integral formed for this additional space vector, **in that** this additional space vector **($\underline{u}$)** is the sum of the transformed normalized differential current space vector and the product of the negative imaginary stator frequency **($-j\hat{n}_s$)** and the time integral formed, **in that** the product of the additional space vector **($\underline{u}$)** and the negative imaginary stator frequency **($-j\hat{n}_s$)** of a time-based derivation of the transformed normalized differential current space vector is summed, **in that** the additional space vector **($\underline{u}$)** is multiplied by the complex factor **$\underline{K}_\omega$** which varies as a function of operating point and its time integral is multiplied by the complex factor **$\underline{K}_I$** which varies as a function of operating point, and **in that** these two processed space vectors and the sum space vector **($\overset{o}{\underline{u}}$)** formed are added to produce a superimposed space vector whose imaginary part **(Im)** forms the system deviation **($\Delta\perp$)** for adjusting the angular velocity of a rotor **($\hat{\omega}$)** system parameter.

4. Method according to Claim 1, **characterized in that** before a further transformation of the stator current model space vector **($\hat{\vec{i}}_s$)** and the stator current real space vector **($\vec{i}_s$)** to the complex reference system is effected in parallel these space vectors **($\hat{\vec{i}}_s, \vec{i}_s$)** are multiplied by a further complex factor **$\underline{K}_R$** which varies as a function of operating point such that the reference space vector **($\hat{\vec{\psi}}_r$)** provided is a normalized rotor flux space vector **($\hat{\vec{\psi}}_r$)** divided by the square of its modulus **($|\hat{\vec{\psi}}_r|^2$)**, and **in that** the real components of the transformation result **(BG, $\hat{BG}$)** are compared with one another and a resultant system deviation **($\Delta\parallel$)** is used to adjust the stator resistance **($\hat{R}_s$)** system parameter such that this resultant system deviation **($\Delta\parallel$)** becomes zero.

5. Method according to Claim 1 or 2, **characterized in that** the complex factor **$\underline{K}_\omega$** which varies as a function of operating point is calculated on the basis of the following equation:

$$\underline{K}_\omega = 1 + j \cdot \hat{n}_r$$

where

$\hat{n}_r$ = normalized angular velocity of the normalized rotor flux space vector $\hat{\vec{\psi}}_r$ in the fixed-rotor reference system (operating parameter).

6. Method according to Claim 1 or 2, **characterized in that** the complex factor **$\underline{K}_\omega$** is calculated on the basis of the following equation:

$$\underline{K}_\omega = 1 + j \cdot \hat{n}_r / \hat{\sigma}$$

where

$\hat{n}_r$ = normalized angular velocity of the normalized rotor flux space vector in the fixed-rotor reference system (operating parameter)
$\hat{\sigma}$ = leakage factor of the polyphase machine (system parameter).

7. Method according to Claim 1 or 2, **characterized in that** the complex factor **$\underline{K}_\omega$** is calculated on the basis of the following equation:

$$\underline{K}_\omega = 1 + j \cdot \hat{n}_r \cdot (2/\hat{\sigma} - 1)$$

where

$\hat{\mathbf{n}}_\mathbf{r}$ = normalized angular velocity of the normalized rotor flux space vector in the fixed-rotor reference system (operating parameter)

$\hat{\sigma}$ = leakage factor of the polyphase machine (system parameter).

8. Method according to Claim 1 or 2, **characterized in that** the complex factor $\underline{\mathbf{K}}_\omega$ is calculated on the basis of the equation in Claim 5 in motor operation.

9. Method according to Claim 1 or 2, **characterized in that** the complex factor $\underline{\mathbf{K}}_\omega$ is calculated on the basis of the equation in Claim 5 when the following applies:

$$|\ \hat{n}_{s}\ | \geqq |\ \hat{n}_{sE}\ |$$

where

$$\hat{n}_{sE}\ =\ -V\ \cdot\ \hat{\rho}\ \cdot\ \hat{n}_{r}\ and\ V\ >\ 1$$

where

$\hat{\mathbf{n}}_\mathbf{s}$ = normalized angular velocity of the normalized rotor flux space vector $\hat{\underline{\psi}}_r$ in the fixed-stator reference system (operating parameter)

$\hat{\mathbf{n}}_\mathbf{r}$ = normalized angular velocity of the normalized rotor flux space vector $\hat{\underline{\psi}}_r$ in the fixed-rotor reference system (operating parameter)

$\hat{\rho}$ = ratio of rotor time constant to stator time constant of the polyphase machine (system parameter)

$\hat{n}_{sE}$ = normalized limit value (final value) of a crossfade range

V = constant.

10. Method according to Claim 1 or 2, **characterized in that** the complex factor $\underline{\mathbf{K}}_\omega$ is calculated on the basis of the equation in Claim 6 or 7 when the following applies:

$$\hat{n}_{s} \cdot \hat{n}_{r} < 0 \text{ and } 0 < |\ \hat{n}_{s}\ | < |\ \hat{n}_{sA}\ |$$

where

$$\hat{n}_{sA}\ =\ \frac{1}{Q \cdot V} \cdot \frac{1-\hat{\sigma}}{1+\hat{n}_{r}^{2}} \cdot \hat{n}_{sE}\ \text{ and } Q > 1$$

where

$\hat{\mathbf{n}}_\mathbf{s}$ = normalized angular velocity of the normalized rotor flux space vector $\hat{\underline{\psi}}_r$ in the fixed-stator reference system (operating parameter)

$\hat{\mathbf{n}}_\mathbf{r}$ = normalized angular velocity of the normalized rotor flux space vector $\hat{\underline{\psi}}_{rr}$ in the fixed-rotor reference system (operating parameter)

$\hat{\mathbf{n}}_\mathbf{sA}$ = normalized limit value (starting value) of a crossfade range

$\hat{\sigma}$ = leakage factor of the polyphase machine

$\hat{\mathbf{n}}_\mathbf{sE}$ = normalized limit value (final value) of a crossfade range

Q,V = constant.

11. Method according to Claim 1 or 2, **characterized in that** the complex factor $\underline{K}_\omega$ in the crossfade range is calculated on the basis of the following equation:

$$\underline{K}_\omega = 1 + j \cdot \hat{n}_r \cdot \left[1 + X^2 \cdot (1 - \hat{\sigma})/\hat{\sigma}\right]$$

where

$$X^2 = \frac{(\hat{n}_{sE} - \hat{n}_s)^2}{(\hat{n}_{sE} - \hat{n}_{sA})^2}$$

where

$\hat{n}_s$ = normalized angular velocity of the normalized rotor flux space vector $\hat{\underline{\Psi}}_r$ in the fixed-stator reference system (operating parameter)

$\hat{n}_r$ = normalized angular velocity of the normalized rotor flux space vector $\hat{\underline{\Psi}}_r$ in the fixed-rotor reference system (operating parameter)

$\hat{n}_{sA}$, $\hat{n}_{sE}$ = normalized limit value (starting and final values) of the crossfade range

$\hat{\sigma}$ = leakage factor of the polyphase machine.

12. Method according to Claim 1 or 2, **characterized in that** the complex factor $\underline{K}_\omega$ in the crossfade range is calculated on the basis of the following equation:

$$\underline{K}_\omega = 1 + j \cdot \hat{n}_r \cdot \left[1 + X^2 \cdot 2 \cdot (1 - \hat{\sigma})/\hat{\sigma}\right]$$

where

$$X^2 = \frac{(\hat{n}_{sE} - \hat{n}_s)^2}{(\hat{n}_{sE} - \hat{n}_{sA})^2}$$

where

$\hat{n}_s$ = normalized angular velocity of the normalized rotor flux space vector $\hat{\underline{\Psi}}_r$ in the fixed-stator reference system (operating parameter)

$\hat{n}_r$ = normalized angular velocity of the normalized rotor flux space vector $\hat{\underline{\Psi}}_r$ in the fixed-rotor reference system (operating parameter)

$\hat{n}_{sA}$, $\hat{n}_{sE}$ = normalized limit value (starting and final values) of the crossfade range

$\hat{\sigma}$ = leakage factor of the polyphase machine.

13. Method according to Claim 2, **characterized in that** a normalized time integral value $(\underline{Y}_{s\tau})$ for the normalized differential current space vector $(\underline{Y}_s)$ is formed which is multiplied by a complex factor $\underline{K}_I$ which varies as a function of operating point, **in that** this processed differential current integral space vector $(\underline{Y}_{s\tau I})$ is added to the processed, normalized differential current space vector ($\Delta \underrightarrow{\mathbf{y}}_{s\omega}$), and **in that** this complex factor (**$\underline{\mathbf{K}}_I$**) is calculated on the basis of the following equation:

$$\underline{\mathbf{K}}_I = \hat{\rho} \cdot (\hat{\sigma} + j \cdot \hat{n}_r)$$

where

$\hat{\rho}$ = ratio of rotor time constant to stator time constant of the polyphase machine
$\hat{\sigma}$ = leakage factor of the polyphase machine

$\hat{\mathbf{n}}_r$ = normalized angular velocity of the normalized rotor flux space vector $\hat{\underrightarrow{\Psi}}_r$ in the fixed-rotor reference system (operating parameter).

**14.** Method according to Claim 13, **characterized in that** the complex factors $\underline{\mathbf{K}}_\omega$ and $\underline{\mathbf{K}}_I$, which vary as a function of operating point, for processing the normalized differential current space vector ($\Delta\underrightarrow{\mathbf{y}}_s$) and its normalized time integral value ($\underrightarrow{\mathbf{y}}_{s\tau}$) are calculated on the basis of the following equations:

$$\underline{\mathbf{K}}_\omega = \hat{\rho} + 1 + j \cdot \hat{n}_r$$

and

$$\underline{\mathbf{K}}_I = \hat{\rho} \cdot (\hat{\sigma} - j \cdot \hat{n})$$

where

$$\hat{n} = \hat{\omega}/\omega_*$$

where

$\hat{\rho}$ = ratio of rotor time constant to stator time constant of the polyphase machine
$\hat{\sigma}$ = leakage factor of the polyphase machine

$\hat{\mathbf{n}}_r$ = normalized angular velocity of the normalized rotor flux space vector $\hat{\underrightarrow{\Psi}}_r$ in a fixed-rotor reference system (operating parameter)

$\hat{\mathbf{n}}$ = normalized difference between the angular velocity of the normalized rotor flux space vector $\hat{\underrightarrow{\Psi}}_r$ in the fixed-stator reference system and in the fixed-rotor reference system
$\hat{\omega}$ = model value of the angular velocity of the rotor of the polyphase machine
$\omega_*$ = reference value of the angular velocity.

**15.** Method according to Claim 13, **characterized in that** a normalized time derivation ($\Delta\underrightarrow{\mathbf{y}}_{sD}$) of the normalized differential current space vector ($\Delta\underrightarrow{\mathbf{y}}_s$) is formed and is added to the sum of the processed normalized differential current integral space vector ($\Delta\underrightarrow{\mathbf{y}}_{s\tau I}$) and the processed differential current space vector ($\Delta\underrightarrow{\mathbf{y}}_{s\omega}$), and **in that** the complex factors $\underline{\mathbf{K}}_\omega$ and $\underline{\mathbf{K}}_I$, which vary as a function of operating point, for processing the normalized differential

current space vector ($\Delta \underrightarrow{\mathbf{\Delta y}}_s$) and its normalized time integral value ($\Delta \underrightarrow{Y}_{s\tau}$) are calculated on the basis of the following equations:

$$\underline{K}_\omega = \hat{\rho} + 1 - j \cdot \hat{n}$$

and

$$\underline{K}_I = \hat{\rho} \cdot (\hat{\sigma} - j \cdot \hat{n})$$

where

$$\hat{n} = \hat{\omega}/\omega_*$$

where

$\hat{\rho}$ = ratio of rotor time constant to stator time constant of the polyphase machine
$\hat{\sigma}$ = leakage factor of the polyphase machine

$\hat{n}$ = normalized difference between the angular velocity of the normalized rotor flux space vector $\hat{\underrightarrow{\psi}}_r$ in the fixed-stator reference system and in the fixed-rotor reference system
$\hat{\omega}$ = model value of the angular velocity of the rotor of the polyphase machine
$\omega_*$ = reference value of the angular velocity.

**16.** Method according to Claim 3, **characterized in that** the additional space vector ($\underrightarrow{\underline{u}}$) is calculated on the basis of the following equation:

$$\underrightarrow{u} = (\Delta\underrightarrow{y}_s \cdot \hat{\underrightarrow{\psi}}_r^* / | \hat{\underrightarrow{\psi}}_r |_2 ) - j \cdot \hat{n}_s \cdot \left[\!\!\int \underrightarrow{u} \cdot d\tau\right]$$

**17.** Method according to Claim 3, **characterized in that** the sum space vector **($\overset{o}{\underrightarrow{\underline{u}}}$)** is calculated on the basis of the following equation:

$$\overset{o}{\underrightarrow{u}} = d(\Delta\underrightarrow{y}_s \cdot \hat{\underrightarrow{\psi}}_r^* / | \hat{\underrightarrow{\psi}}_r |_2 ) / d\tau - j \cdot \hat{n}_s \cdot \underrightarrow{u}$$

**18.** Method according to Claim 3, **characterized in that** the time integral formed for the additional space vector ($\underrightarrow{\underline{u}}$) is calculated on the basis of the following equation:

$$\left[\!\!\int \underrightarrow{u} \cdot d\tau\right] \approx \left\{\!\!\int \Delta\underrightarrow{y}_s \cdot d\tau\right\} \cdot \hat{\underrightarrow{\psi}}_r^* / | \hat{\underrightarrow{\psi}}_r |_2$$

**19.** Method according to Claim 3, **characterized in that** the complex factor $\underline{K}_\omega$ which varies as a function of operating point is calculated on the basis of the following equation:

$$\underline{K}_\omega = \hat\rho + 1 + j \cdot (\hat{n}_s + \hat{n}_r)$$

where

$\hat\rho$ = ratio of rotor time constant to stator time constant of the polyphase machine

$\hat{n}_s$ = normalized angular velocity of the normalized rotor flux space vector $\hat{\underline{\psi}}_r$ in the fixed-stator reference system (operating parameter)

$\hat{n}_r$ = normalized angular velocity of the normalized rotor flux space vector $\hat{\underline{\psi}}_r$ in the fixed-rotor reference system (operating parameter).

20. Method according to Claim 3, **characterized in that** the complex factor $\underline{K}_I$ which varies as a function of operating point is calculated on the basis of the following equation:

$$\underline{K}_I = \hat\rho \cdot \hat\sigma - \hat{n}_s \cdot \hat{n}_r + j \cdot (\hat{n}_s + \hat\rho \cdot \hat{n}_r) = \underline{Z}$$

where

$\hat\rho$ = ratio of rotor time constant to stator time constant of the polyphase machine
$\hat\sigma$ = leakage factor of the polyphase machine

$\hat{n}_s$ = normalized angular velocity of the normalized rotor flux space vector $\hat{\underline{\psi}}_r$ in the fixed-stator reference system (operating parameter)

$\hat{n}_r$ = normalized angular velocity of the normalized rotor flux space vector $\hat{\underline{\psi}}_r$ in the fixed-rotor reference system (operating parameter).

21. Method according to Claim 2, **characterized in that** the resultant differential current space factor $(\Delta\underline{\underline{y}}_s)$ is multiplied by a further complex factor $\underline{K}_R$ which varies as a function of operating point, and **in that** when this processed differential current space vector $(\Delta\underline{\underline{y}}_{sR})$ has been transformed to the complex reference system its real component forms the system deviation $(\Delta\|)$.

22. Method according to Claim 4 or 21, **characterized in that** the further complex factor $\underline{K}_R$ which varies as a function of operating point is calculated on the basis of the following equation:

$$\underline{K}_R = -j \cdot \underline{Z}$$

where

$$\underline{Z} = \hat\rho \cdot \hat\sigma - \hat{n}_s \cdot \hat{n}_r + j \cdot (\hat{n}_s + \hat\rho \cdot \hat{n}_r)$$

where

$\hat\rho$ = ratio of rotor time constant to stator time constant of the polyphase machine
$\hat\sigma$ = leakage factor of the polyphase machine

$\hat{n}_s$ = normalized angular velocity of the normalized rotor flux space vector $\hat{\underline{\psi}}_r$ in the fixed-stator reference system (operating parameter)

$\hat{\mathbf{n}}_\mathbf{r}$ = normalized angular velocity of the normalized rotor flux space vector $\hat{\underline{\Psi}}_r$ in the fixed-rotor reference system (operating parameter).

23. Method according to Claim 3, **characterized in that** multiplication by a real factor $\mathbf{K_R}$ which has been formed and which comprises a real part (Re) of the superimposed space vector produced determines a system deviation ($\Delta\|$) for adjusting the stator resistance ($\hat{\mathbf{R}}_\mathbf{s}$) system parameter, said system deviation being multiplied by a real decoupling factor $K_E$ and added to the imaginary part (Im) of the superimposed space vector formed.

24. Method according to Claim 23, **characterized in that** the real factor $K_R$ is calculated on the basis of the following equation:

$$\mathbf{K}_\mathbf{R} = \hat{n}_s \cdot (1-\hat{\sigma})^2 /(2 \cdot \hat{\sigma} \cdot \hat{n}_r)$$

where

$\hat{\sigma}$ = leakage factor of the polyphase machine

$\hat{\mathbf{n}}_\mathbf{r}$ = normalized angular velocity of the normalized rotor flux space vector $\hat{\underline{\Psi}}_r$ in the fixed-rotor reference system (operating parameter).

25. Method according to Claim 23, **characterized in that** the real decoupling factor $K_E$ is calculated on the basis of the following equation:

$$\mathbf{K}_\mathbf{E} = (\hat{\sigma} - \hat{n}_r^2)/\left[\hat{n}_s \cdot (1-\hat{\sigma})^2\right]$$

where

$\hat{\sigma}$ = leakage factor of the polyphase machine

$\hat{\mathbf{n}}_\mathbf{r}$ = normalized angular velocity of the normalized rotor flux space vector $\hat{\underline{\Psi}}_r$ in the fixed-rotor reference system (operating parameter)

$\hat{\mathbf{n}}_\mathbf{s}$ = normalized angular velocity of the normalized rotor flux space vector $\hat{\underline{\Psi}}_r$ in the fixed-stator reference system (operating parameter).

26. Method according to Claim 3, **characterized in that** the time derivation of the transformed normalized differential current space vector ($\overset{\vee}{\to}$) and the transformed normalized differential current space vector ($\overset{\vee}{\to}$) multiplied by the complex factor $\underline{\mathbf{K}}_\omega$, which varies as a function of operating point, are added, the real part (Re) thereof is multiplied by a real factor $K_R$, and this product ($\Delta\|$) is multiplied by a real decoupling factor $K_E$, the product of which is added to the imaginary part (Im), and **in that** one product ($\Delta\|$) is used to adjust the stator resistance ($\hat{\mathbf{R}}_\mathbf{s}$) system parameter and the other product is used to adjust the normalized rotation speed ($\hat{\mathbf{n}}$) of the machine model.

27. Method according to Claim 26, **characterized in that** the real factor $K_R$ is calculated on the basis of the following equation:

$$K_R = \hat{n}_s \cdot (1 - \hat{\sigma})^2 / (2 \cdot \hat{\sigma} \cdot \hat{n}_r)$$

where

$\hat{\sigma}$ = leakage factor of the polyphase machine

$\hat{\mathbf{n}}$ = normalized angular velocity of the normalized rotor flux space vector $\underrightarrow{\hat{\Psi}}_r$ in the fixed-rotor reference system (operating parameter)

$\hat{\mathbf{n}}_\mathbf{s}$ = normalized angular velocity of the normalized rotor flux space vector $\underrightarrow{\hat{\Psi}}_r$ in the fixed-stator reference system (operating parameter).

**28.** Method according to Claim 26, **characterized in that** the real decoupling factor $K_E$ is calculated on the basis of the following equation:

$$\mathbf{K}_E = (\hat{\sigma} - \hat{n}_r^2)/\left[\hat{n}_s \cdot (1 - \hat{\sigma})^2\right]$$

where

$\hat{\sigma}$ = leakage factor of the polyphase machine

$\hat{\mathbf{n}}_\mathbf{r}$ = normalized angular velocity of the normalized rotor flux space vector $\underrightarrow{\hat{\Psi}}_r$ in the fixed-rotor reference system (operating parameter)

$\hat{\mathbf{n}}_\mathbf{s}$ = normalized angular velocity of the normalized rotor flux space vector $\underrightarrow{\hat{\Psi}}_r$ in the fixed-stator reference system (operating parameter).

**29.** Method according to Claim 26, **characterized in that** the complex factor **($\underline{K}_\omega$)** which varies as a function of operating point is calculated on the basis of the following equation:

$$\underline{\mathbf{K}}_\omega = 1 + \hat{\rho} \cdot \hat{n}_r/\hat{n}_s - j \cdot \left[\hat{\rho} \cdot \hat{\sigma}/\hat{n}_s - \hat{n}_r\right]$$

where

$\hat{\rho}$ = ratio of rotor time constant to stator time constant of the polyphase machine
$\hat{\sigma}$ = leakage factor of the polyphase machine

$\hat{\mathbf{n}}_\mathbf{r}$ = normalized angular velocity of the normalized rotor flux space vector $\underrightarrow{\hat{\Psi}}_r$ in the fixed-rotor reference system (operating parameter)

$\hat{\mathbf{n}}_\mathbf{s}$ = normalized angular velocity of the normalized rotor flux space vector $\underrightarrow{\hat{\Psi}}_r$ in the fixed-stator reference system (operating parameter).

**30.** Method according to Claim 4 or 21, **characterized in that** the resultant system deviation **($\Delta\|$)** is multiplied by an arithmetic sign (sign $\hat{\mathbf{n}}_\mathbf{r}$).

**31.** Device for carrying out the method according to Claim 1 having a signal processor (2) which contains a full machine model and a device for generating control signals ($S_a$, $S_b$, $S_c$), having a first and a second multiplier (18, 20), having a current measuring element (6) with a downstream coordinate converter (8), having a comparator (24, 30) and having an equalizing controller (22), **characterized in that** the signal processor (2) has a downstream device (44) for calculating complex factors $\underline{K}_\omega$ and $\underline{K}_R$, **in that** the coordinate converter (8) has a downstream real value multiplier ($38_1$) whose output is linked to a first input of the second multiplier ($20_1$), **in that** the output of the signal processor (2), which produces a stator current model space vector ($\underrightarrow{\hat{i}}_s$), has a downstream setpoint multiplier ($36_1$) whose output is linked to a first input of the first multiplier ($18_1$), **in that** an output of the device (44) for calculating the complex factors $\underline{K}_\omega$ and $\underline{K}_R$, which produces the complex factor $\underline{K}_\omega$, is respectively connected to a second input of the setpoint and real value multipliers ($36_1$, $38_1$), **in that** a further output of the signal processor (2), which produces the conjugated complex reference space vector ($\underrightarrow{\hat{T}}^*$), is connected to a second input of the first and second multipliers

($18_1$, $20_1$), and **in that** the outputs of the multipliers ($18_1$, $20_1$), which produce the imaginary components (WG, WG), are linked to the comparator (24), whose output is linked to a parameter input of the signal processor (2) via the equalizing controller (22).

32. Device for carrying out the method according to Claim 1 and 2 having a signal processor (2) which contains a full machine model and a device for generating control signals ($S_a$, $S_b$, $S_c$), having a first and a second multiplier (18, 20), having a current measuring element (6) with a downstream coordinate converter (8) and having an equalizing controller (22), **characterized in that** the output of the coordinate converter (8) and the output of the signal processor (2), which produces a stator current model space vector ($\hat{\underline{i}}_s$), are connected to a comparator device (46) whose output is respectively linked to a first input of a setpoint and a real value multiplier (36, 38), **in that** the signal processor (2) has a downstream device (44) for calculating complex factors $\underline{K}_\omega$ and $\underline{K}_R$ whose outputs are respectively connected to a second input of the setpoint and real value multipliers (36, 38), **in that** the outputs of these setpoint and real value multipliers (36, 38) are linked to a first input of the first and second multipliers (18, 20), whereas a second input of these multipliers (18, 20) is connected to an output of the signal processor (2) which produces the conjugated complex reference space vector ($\hat{\underline{T}}^*$), and **in that** an output of the first multiplier (18) which produces the system deviation ($\Delta\perp$) is linked to a parameter input of the signal processor (2) by means of the equalizing controller (22).

33. Device according to Claim 31, **characterized in that** the coordinate converter (8) has a downstream second real value multiplier ($38_2$) whose output is linked to a first input of the second multiplier ($20_2$), **in that** the output of the signal processor (2) which produces a stator current model space vector ($\hat{\underline{i}}_s$) has a downstream second setpoint multiplier ($36_2$) whose output is linked to a first input of the first multiplier ($18_2$), **in that** the outputs of the signal processor (2) which produce the complex factors $\underline{K}_\omega$ and $\underline{K}_R$ are respectively connected to a second input of the setpoint and real value multipliers ($36_2$, $38_2$), **in that** a further output of the signal processor (2) which produces the conjugated complex reference space vector ($\hat{\underline{T}}^*$) is connected to a second input of the first and second multipliers ($18_2$, $20_2$), and **in that** the outputs of the multipliers ($18_2$, $20_2$) which produce the real components ($\hat{BG}$,BG) are linked to a further comparator (30), whose output is linked via a further equalizing controller (32) to a further parameter input of the signal processor (2).

34. Device according to Claim 32, **characterized in that** the output of the second multiplier (20), which produces the system deviation ($\Delta\parallel$), is linked to a further parameter input of the signal processor (2) by means of a further equalizing controller (32).

35. Device according to Claim 33 or 34, **characterized in that** the further equalizing controller (32) has an upstream multiplier (34) whose second input is linked to an output of the signal processor (2) which produces an arithmetic-sign signal (sign $\hat{n}_r$).

36. Device according to Claim 32, **characterized in that** the comparator device (46) has its output linked to an integrator (48) whose output is connected via a further multiplier (50) to an adder (52) whose first input is linked to the setpoint multiplier (36) and whose output is linked to a first input of the first multiplier (18), and **in that** a second input of the further multiplier (50) is connected to an output of the device (44) for calculating the complex factors $\underline{K}_\omega$, $\underline{K}_R$ and $\underline{K}_l$ which produces the complex factor $\underline{K}_l$.

37. Device according to Claim 32 and 36, **characterized in that** the comparator device (46) has its output linked to a differentiator (56) whose output is connected to a further input of the adder (52).

38. Device according to Claim 32, **characterized in that** the comparator device (46) has its output connected to a first input of a further multiplier (58) whose second input is linked to an output of the signal processor (2) which produces the conjugated complex reference space vector ($\hat{\underline{T}}^*$) and whose output is connected firstly to a further adder (60) and secondly to a differentiator (62) whose output is linked to an input of a further adder (64), **in that** an output of the signal processor (2) which produces a negative imaginary stator frequency **(-j$\hat{n}_s$)** is connected to a respective first input of two further multipliers (68, 70), where a second input of the further multiplier (70) is linked to the output of the further adder (60) and the output of this further multiplier (70) is linked to the further adder (64), **in that** the output of the further adder (60) is connected firstly to an input of an integrator (72) and secondly to a first input of the setpoint multiplier (36), where the output of this integrator (72) is linked firstly to a second input of the further multiplier (68) and secondly to a first input of a multiplier (50) whose second input is connected to an output of the device (44) which produces a complex factor **$\underline{K}_I$,** and **in that** the outputs of the multiplier (50), of the setpoint multiplier (36) and of the adder (64) are connected to inputs of an adder (52) whose second output is linked to the equalizing controller (22).

39. Device according to Claim 38, **characterized in that** the second output of the adder (52) is connected to the equalizing controller (22) by means of a further adder (86), **in that** a first output of this adder (52) is linked to a first input of a multiplier (78) whose second input is connected to an output of the device (44) which produces a real factor $K_R$ and whose output is connected firstly to an input of a multiplier (80) and secondly to the further equalizing controller (32), and **in that** the second input of the multiplier (80) is linked to an output of the device (44) which produces a real decoupling factor $K_E$, and its output is linked to the adder (86).

40. Device according to Claim 32, **characterized in that** the comparison device (46) has its output connected to a first input of a further multiplier (58) whose second input is linked to an output of the signal processor (2) which produces the conjugated complex reference space vector ($\underline{\hat{T}}^*$) and whose output is connected firstly to a differentiator (62) and secondly to a first input of the setpoint multiplier (36), **in that** the outputs of the differentiator (62) and of the setpoint multiplier (36) are linked to inputs of an adder (52), where the second input of the setpoint multiplier (36) is connected to an output of the device (44) which produces the complex factor **$\underline{K}_\omega$, in that** a first output of the adder (52) is linked to a first input of a multiplier (78) whose second input is connected to an output of the device (44) which produces a real factor $K_R$ and whose output is connected firstly to an input of a multiplier (80) and secondly to the further equalizing controller (32), and **in that** the second input of the multiplier (80) is linked to an output of the device (44) which produces a real decoupling factor $K_E$, and its output is linked to the adder (86).

## Revendications

1. Procédé de détermination d'une vitesse angulaire de rotor ($\omega$) d'une machine polyphasée sans transmetteur et à orientation de champ (DM), dans lequel on calcule en fonction d'une valeur de consigne de flux ($\hat{SF}$), d'une valeur de consigne de couple ($\hat{SM}$), d'une valeur de tension continue ($2E_d$) présente côté entrée au convertisseur à impulsions (SR) de la machine polyphasée (DM), de valeurs de tension de sortie de convertisseur mesurées ($\overline{e}_{aM}$, $\overline{e}_{bM}$, $\overline{e}_{cM}$) et de paramètres de système ($\hat{L}_\mu$, $\hat{L}_\sigma$, $\hat{R}_s$, $\hat{R}_r / \hat{L}_\sigma$, $\hat{\omega}$) d'une part des signaux de commande de convertisseur ($S_a$, $S_b$, $S_c$) et d'autre part un vecteur spatial modèle de courant statorique ($\overrightarrow{\hat{i}}_s$) et un vecteur spatial de référence complexe conjugué ($\overrightarrow{\hat{T}}^*$) et dans lequel on multiplie ce vecteur spatial modèle de courant statorique ($\overrightarrow{\hat{i}}_s$) déterminé et un vecteur spatial réel de courant statorique ($\overrightarrow{i}_s$) déterminé, pour la transformation dans un système de référence complexe à orientation de champ, à chaque fois par le vecteur spatial de référence complexe conjugué ($\overrightarrow{\hat{T}}^*$) calculé, on décompose les résultats en une partie réelle et une partie imaginaire (BG, $\hat{BG}$, WG, $\hat{WG}$) du système de référence complexe, on compare ces parties imaginaires (WG, $\hat{WG}$) entre elles et on utilise un écart de régulation ($\Delta\perp$) déterminé à partir de là pour le réglage du paramètre de système vitesse angulaire de rotor ($\hat{\omega}$) de telle sorte que cet écart de régulation ($\Delta\perp$) devienne nul, **caractérisé par le fait que**, avant la transformation du vecteur spatial modèle de courant statorique ($\underset{\rightarrow}{\hat{i}}_s$) et du vecteur spatial réel de courant statorique ($\underset{\rightarrow}{i}_s$) dans le système de référence complexe, on multiplie ces vecteurs spatiaux ($\underset{\rightarrow}{\hat{i}}_s$, $\underset{\rightarrow}{i}_s$) par un facteur complexe variable $\underline{K}_\omega$ dépendant du point de fonctionnement et que, comme vecteur spatial de référence ($\underset{\rightarrow}{\hat{T}}$), on prévoit un vecteur spatial de flux rotorique normé ($\underset{\rightarrow}{\hat{\psi}}_r$) divisé par le carré de sa norme ($\underset{\rightarrow}{|\hat{\psi}_r|^2}$).

**2.** Procédé selon la revendication 1, **caractérisé par le fait que** l'on norme le vecteur spatial modèle de courant statorique ($\underset{\rightarrow}{\hat{i}}_s$) et le vecteur spatial réel de courant statorique ($\underset{\rightarrow}{i}_s$), que l'on compare entre eux ces vecteurs spatiaux normés ($\underset{\rightarrow}{\hat{Y}}_s$, $\underset{\rightarrow}{Y}_s$), que l'on multiplie un vecteur spatial de courant différentiel relatif ($\Delta \underset{\rightarrow}{Y}_s$) déterminé à partir de là par le facteur complexe $\underline{K}_\omega$ et que, après la transformation de ce vecteur spatial de courant différentiel relatif préparé ($\Delta \underset{\rightarrow}{Y}_{s\omega}$) dans le système de référence complexe, sa partie imaginaire forme l'écart de régulation ($\Delta\|$).

**3.** Procédé selon la revendication 1, **caractérisé par le fait que** l'on multiplie le vecteur spatial de courant différentiel relatif déterminé ($\Delta \underset{\rightarrow}{Y}_s$), pour la transformation dans un système de référence complexe, par le vecteur spatial de référence complexe conjugué calculé ($\underset{\rightarrow}{\hat{T}}^\star$), que l'on multiplie une fréquence statorique imaginaire négative formée (- j $\hat{n}_s$) d'une part par un vecteur spatial supplémentaire formé ($\underset{\rightarrow}{(u)}$) et d'autre part par une intégrale de temps formée de ce vecteur spatial supplémentaire, que ce vecteur spatial supplémentaire ($\underset{\rightarrow}{(u)}$) est la somme du vecteur spatial de courant différentiel relatif transformé et du produit de la fréquence statorique imaginaire négative (- j $\hat{n}_s$) et de l'intégrale de temps formée, que l'on additionne le produit du vecteur spatial supplémentaire ($\underset{\rightarrow}{(u)}$) et de la fréquence statorique imaginaire négative (- j $\hat{n}_s$) à une dérivée temporelle du vecteur spatial de courant différentiel relatif transformé, que l'on multiplie le vecteur spatial supplémentaire ($\underset{\rightarrow}{(u)}$) par le facteur complexe variable $\underline{K}_\omega$ dépendant du point de fonctionnement et son intégrale de temps par le facteur complexe variable $\underline{K}_I$ dépendant du point de fonctionnement et que l'on additionne ces deux vecteurs spatiaux préparés et le vecteur spatial cumulé formé ($\underset{\rightarrow}{\overset{\circ}{u}}$) à un vecteur spatial de superposition dont la partie imaginaire (Im) forme l'écart de régulation ($\Delta \perp$) pour le réglage du paramètre de système vitesse angulaire de rotor ($\hat{\omega}$).

**4.** Procédé selon la revendication 1, **caractérisé par le fait que**, avant une autre transformation effectuée parallèlement du vecteur spatial modèle de courant statorique ($\underset{\rightarrow}{\hat{i}}_s$) et du vecteur spatial réel de courant statorique ($\underset{\rightarrow}{i}_s$) dans le système de référence complexe, on multiplie ces vecteurs spatiaux ($\underset{\rightarrow}{\hat{i}}_s$, $\underset{\rightarrow}{i}_s$) de telle sorte par un autre facteur

variable $\underline{K}_R$ dépendant du point de fonctionnement qu'il est prévu comme vecteur spatial de référence ($\rightarrow \hat{T}$) un

vecteur spatial de flux rotorique normé ($\rightarrow \hat{\psi}_r$) divisé par le carré de sa norme ($\rightarrow |\hat{\psi}_r|^2$), que l'on compare entre elles les parties réelles du résultat de transformation (BG, $\hat{BG}$) et que l'on utilise un écart de régulation ($\Delta \|$) pour le réglage du paramètre de système résistance statorique ($\dot{R}_s$) de telle sorte que cet écart de régulation déterminé ($\Delta \|$) devienne nul.

5. Procédé selon la revendication 1 ou 2, **caractérisé par le fait que** l'on calcule le facteur complexe variable $\underline{K}_\omega$ dépendant du point de fonctionnement selon la formule suivante :

$$\underline{K}_\omega = 1 + j \cdot \hat{n}_r$$

avec

$\hat{n}_r$ = vitesse angulaire normée du vecteur spatial de flux rotorique normé $\rightarrow \hat{\psi}_r$ dans le système de référence par rapport au rotor (paramètre de fonctionnement).

6. Procédé selon la revendication 1 ou 2, **caractérisé par le fait que** l'on calcule le facteur complexe $\underline{K}_\omega$ selon la formule suivante :

$$\underline{K}_\omega = 1 + j \cdot \hat{n}_r / \hat{\sigma}$$

avec

$\hat{n}_r$ = vitesse angulaire normée du vecteur spatial de flux rotorique normé dans le système de référence par rapport au rotor (paramètre de fonctionnement)
$\hat{\sigma}$ = facteur de dispersion de la machine polyphasée (paramètre de système).

7. Procédé selon la revendication 1 ou 2, **caractérisé par le fait que** l'on calcule le facteur complexe $\underline{K}_\omega$ selon la formule suivante :

$$K_\omega = 1 + j \cdot \hat{n}_r \cdot (2 / \hat{\sigma} - 1)$$

avec

$\hat{n}_r$ = vitesse angulaire normée du vecteur spatial de flux rotorique normé dans le système de référence par rapport au rotor (paramètre de fonctionnement)
$\hat{\sigma}$ = facteur de dispersion de la machine polyphasée (paramètre de système).

8. Procédé selon la revendication 1 ou 2, **caractérisé par le fait que** l'on calcule le facteur complexe $\underline{K}_\omega$ selon la formule de la revendication 5 dans le cas d'un fonctionnement moteur.

9. Procédé selon la revendication 1 ou 2, **caractérisé par le fait que** l'on calcule le facteur complexe $\underline{K}_\omega$ selon la formule de la revendication 5 lorsque :

$$|\hat{n}_s| \geq |\hat{n}_{sE}|$$

avec

$$\hat{n}_{sE} = - V \cdot \hat{\rho} \cdot \hat{n}_r \text{ et } V > 1$$

avec

$\hat{n}_s$ = vitesse angulaire normée du vecteur spatial de flux rotorique normé $\xrightarrow{\hat{\psi}_r}$ dans le système de référence par rapport au stator (paramètre de fonctionnement)

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{\rho}$ = rapport de la constante de temps de rotor à la constante de temps de stator de la machine polyphasée (paramètre de système)

$\hat{n}_{sE}$ = valeur limite normée (valeur finale) d'une plage d'enchaînement

$V$ = constante.

**10.** Procédé selon la revendication 1 ou 2, **caractérisé par le fait que** l'on calcule le facteur complexe $\underline{K}_\omega$ selon la formule de la revendication 6 ou 7 lorsque :

$$\hat{n}_s \cdot \hat{n}_r < 0 \text{ et } 0 < |\hat{n}_s| < |\hat{n}_{sA}|$$

avec

$$\hat{n}_{sA} = \frac{1}{Q \cdot V} \cdot \frac{1 - \hat{\sigma}}{1 + \hat{n}_r^2} \cdot \hat{n}_{sE} \text{ et } Q > 1$$

avec

$\hat{n}_s$ = vitesse angulaire normée du vecteur spatial de flux rotorique normé $\xrightarrow{\hat{\psi}_r}$ dans le système de référence par rapport au stator (paramètre de fonctionnement)

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_{sA}$ = valeur limite normée (valeur initiale) d'une plage d'enchaînement

$\hat{\sigma}$ = facteur de dispersion de la machine polyphasée

$\hat{n}_{SE}$ = valeur limite normée (valeur finale) d'une plage d'enchaînement

$Q, V$ = constante.

**11.** Procédé selon la revendication 1 ou 2, **caractérisé par le fait que** l'on calcule le facteur complexe $\underline{K}_\omega$ dans la plage d'enchaînement selon la formule suivante :

$$\underline{K}_\omega = 1 + j \cdot \hat{n}_r \cdot [1 + X^2 \cdot (1 - \hat{\sigma}) / \hat{\sigma}]$$

avec

$$X^2 = \frac{\left(\hat{n}_{sE} - \hat{n}_s\right)^2}{\left(\hat{n}_{sE} - \hat{n}_{sA}\right)^2}$$

avec

$\hat{n}_s$ = vitesse angulaire normée du vecteur spatial de flux rotorique normé $\xrightarrow{\hat{\psi}_r}$ dans le système de référence par rapport au stator (paramètre de fonctionnement)

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_{sA}$, $\hat{n}_{sE}$ = valeur limite normée (valeur initiale et valeur finale) d'une plage d'enchaînement

$\hat{\sigma}$ = facteur de dispersion de la machine polyphasée.

**12.** Procédé selon la revendication 1 ou 2, **caractérisé par le fait que** l'on calcule le facteur complexe $\underline{K}_\omega$ dans la plage d'enchaînement selon la formule suivante :

$$\underline{K}_\omega = 1 + j \cdot \hat{n}_r \cdot [1 + X^2 \cdot 2 \cdot (1 - \hat{\sigma}) / \hat{\sigma}]$$

avec

$$X^2 = \frac{\left(\hat{n}_{sE} - \hat{n}_s\right)^2}{\left(\hat{n}_{sE} - \hat{n}_{sA}\right)^2}$$

avec

$\hat{n}_s$ = vitesse angulaire normée du vecteur spatial de flux rotorique normé $\xrightarrow{\hat{\psi}_r}$ dans le système de référence par rapport au stator (paramètre de fonctionnement)

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_{sA}$, $\hat{n}_{sE}$ = valeur limite normée (valeur initiale et valeur finale) d'une plage d'enchaînement

$\hat{\sigma}$ = facteur de dispersion de la machine polyphasée.

**13.** Procédé selon la revendication 2, **caractérisé par le fait que** l'on forme une valeur intégrale de temps normée ($\Delta \xrightarrow{\underline{Y}_{s\tau}}$) du vecteur spatial de courant différentiel relatif ($\Delta \xrightarrow{\hat{\underline{Y}}_s}$), qui est multipliée par un facteur complexe variable $\underline{K}_I$ dépendant du point de fonctionnement, que l'on additionne ce vecteur spatial intégral de courant différentiel préparé ($\Delta \xrightarrow{\underline{Y}_{s\tau I}}$) au vecteur spatial de courant différentiel relatif préparé ($\Delta \xrightarrow{\underline{Y}_{s\omega}}$) et que l'on calcule ce facteur complexe ($\underline{K}_I$) selon la formule suivante :

$$\underline{K}_I = \hat{\rho} \cdot (\hat{\sigma} + j \cdot \hat{n}_r)$$

avec

$\hat{\rho}$ = rapport de la constante de temps de rotor à la constante de temps de stator de la machine polyphasée

$\hat{\sigma}$ = facteur de dispersion de la machine polyphasée

$\hat{n}_r$ = vitesse angulaire normée du vecteur spatial de flux rotorique normé $\xrightarrow{\hat{\psi}_r}$ dans le système de référence par rapport au rotor (paramètre de fonctionnement).

**14.** Procédé selon la revendication 13, **caractérisé par le fait que** l'on calcule les facteurs complexes variables $\underline{K}_\omega$ et $\underline{K}_I$ dépendant du point de fonctionnement pour préparer le vecteur spatial de courant différentiel relatif ($\Delta \xrightarrow{\underline{Y}_s}$ ) et sa valeur intégrale de temps normée ($\Delta \xrightarrow{\underline{Y}_{s\tau}}$ ) selon les formules suivantes :

$$\underline{K}_\omega = \hat{\rho} + 1 + j \cdot \hat{n}_r$$

et

$$\underline{K}_I = \hat{\rho} \cdot (\hat{\sigma} - j \cdot \hat{n})$$

avec

$$\hat{n} = \hat{\omega} / \omega_*$$

avec

$\hat{\rho}$ = rapport de la constante de temps de rotor à la constante de temps de stator de la machine polyphasée

$\hat{\sigma}$ = facteur de dispersion de la machine polyphasée

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}$ = différence normée de la vitesse angulaire du vecteur spatial de flux rotorique normé $\xrightarrow{\hat{\psi}_r}$ dans le système de référence par rapport au stator et par rapport au rotor

$\hat{\omega}$ = valeur modèle de la vitesse angulaire du rotor de la machine polyphasée

$\omega_*$ = valeur de référence de la vitesse angulaire.

**15.** Procédé selon la revendication 13, **caractérisé par le fait que** l'on forme une dérivée temporelle normée ($\Delta \xrightarrow{\underline{Y}_{sD}}$ ) du vecteur spatial de courant différentiel relatif ($\Delta \xrightarrow{\underline{Y}_s}$ ), que l'on fait la somme du vecteur spatial intégral de courant différentiel relatif préparé ($\Delta \xrightarrow{\underline{Y}_{s\tau I}}$ ) et du vecteur spatial de courant différentiel préparé ($\Delta \xrightarrow{\underline{Y}_{s\omega}}$ ) et que l'on calcule les facteurs complexes variables $\underline{K}_\omega$ et $\underline{K}_I$ dépendant du point de fonctionnement pour préparer le vecteur spatial de courant différentiel relatif ($\Delta \xrightarrow{\underline{Y}_s}$ ) et sa valeur intégrale de temps normée ($\Delta \xrightarrow{\underline{Y}_{s\tau}}$ ) selon les formules suivantes :

$$\underline{K}_\omega \;=\; \hat{\rho} \;+\; 1 \;-\; j \;\cdot\; \hat{n}$$

et

$$\underline{K}_I \;=\; \hat{\rho} \;\cdot\; (\hat{\sigma} \;-\; j \;\cdot\; \hat{n})$$

avec

$$\hat{n} \;=\; \hat{\omega} \;/\; \omega_*$$

avec

$\hat{\rho}$ = rapport de la constante de temps de rotor à la constante de temps de stator de la machine polyphasée
$\hat{\sigma}$ = facteur de dispersion de la machine polyphasée

$\hat{n}$ = différence normée de la vitesse angulaire du vecteur spatial de flux rotorique normé $\overset{\hat{\psi}_r}{\longrightarrow}$ dans le système de référence par rapport au stator et par rapport au rotor
$\hat{\omega}$ = valeur modèle de la vitesse angulaire du rotor de la machine polyphasée
$\omega^*$ = valeur de référence de la vitesse angulaire.

**16.** Procédé selon la revendication 3, **caractérisé par le fait que** l'on calcule le vecteur spatial supplémentaire $\overset{(\;\underline{u}\;)}{\longrightarrow}$ selon la formule suivante :

$$\overset{u}{\longrightarrow} \;=\; (\Delta \;\overset{y}{\longrightarrow}_s \;\cdot\; \overset{\hat{\psi}}{\longrightarrow}_r^{\,*} \;/\; |\overset{\hat{\psi}}{\longrightarrow}_r|^2) \;-\; j \;\cdot\; \hat{n}_s \;\cdot\; \left[\int \overset{u}{\longrightarrow} \cdot \, d\tau\right]$$

**17.** Procédé selon la revendication 3, **caractérisé par le fait que** l'on calcule le vecteur spatial cumulé ($\overset{u}{\longrightarrow}$) selon la formule suivante :

$$\overset{\overset{\circ}{u}}{\longrightarrow} \;=\; d\;(\Delta \;\overset{y}{\longrightarrow}_s \;\cdot\; \overset{\hat{\psi}}{\longrightarrow}_r^{\,*} \;/\; |\overset{\hat{\psi}}{\longrightarrow}_r|^2) \;/\; d\tau \;-\; j \;\cdot\; \hat{n}_s \;\cdot\; \overset{u}{\longrightarrow}$$

**18.** Procédé selon la revendication 3, **caractérisé par le fait que** l'on calcule l'intégrale de temps formée du vecteur spatial supplémentaire $\overset{(\;u\;)}{\longrightarrow}$ selon la formule suivante :

$$\left[\int \overset{u}{\longrightarrow} \cdot \, d\tau\right] \;=\; \left\{\int \overset{y}{\longrightarrow}_s \cdot \, d\tau\right\} \;\cdot\; \overset{\hat{\psi}}{\longrightarrow}_r^{\,*} \;/\; |\overset{\hat{\psi}}{\longrightarrow}_r|^2$$

**19.** Procédé selon la revendication 3, **caractérisé par le fait que** l'on calcule le facteur complexe variable $\underline{K}_\omega$ dépendant du point de fonctionnement selon la formule suivante :

$$\underline{K}_{\omega} = \hat{\rho} + 1 + j \cdot (\hat{n}_s + \hat{n}_r)$$

avec

$\hat{\rho}$ = rapport de la constante de temps de rotor à la constante de temps de stator de la machine polyphasée

$\hat{n}_s$ = vitesse angulaire normée du vecteur spatial de flux rotorique normé $\rightarrow$ $\hat{\psi}_r$ dans le système de référence par rapport au stator (paramètre de fonctionnement)

$\hat{n}_r$ = vitesse angulaire normée du vecteur spatial de flux rotorique normé $\rightarrow$ $\hat{\psi}_r$ dans le système de référence par rapport au rotor (paramètre de fonctionnement).

**20.** Procédé selon la revendication 3, **caractérisé par le fait que** l'on calcule le facteur complexe variable $\underline{K}_I$ dépendant du point de fonctionnement selon la formule suivante :

$$\underline{K}_I = \hat{\rho} \cdot \hat{\sigma} - \hat{n}_s \cdot \hat{n}_r + j \cdot (\hat{n}_s + \hat{\rho} \cdot \hat{n}_r) = \underline{Z}$$

avec

$\hat{\rho}$ = rapport de la constante de temps de rotor à la constante de temps de stator de la machine polyphasée
$\hat{\sigma}$ = facteur de dispersion de la machine polyphasée

$\hat{n}_s$ = vitesse angulaire normée du vecteur spatial de flux rotorique normé $\rightarrow$ $\hat{\psi}_r$ dans le système de référence par rapport au stator (paramètre de fonctionnement)

$\hat{n}_r$ = vitesse angulaire normée du vecteur spatial de flux rotorique normé $\rightarrow$ $\hat{\psi}_r$ dans le système de référence par rapport au rotor (paramètre de fonctionnement).

**21.** Procédé selon la revendication 2, **caractérisé par le fait que** l'on multiplie le vecteur spatial de courant différentiel déterminé ($\Delta \rightarrow \underline{Y}_s$ ) par un autre facteur complexe variable $\underline{K}_R$ dépendant du point de fonctionnement et que, après la transformation de ce vecteur spatial de courant différentiel préparé ($\Delta \rightarrow \underline{Y}_{sR}$ ) dans le système de référence complexe, sa partie réelle forme l'écart de régulation ($\Delta ||$).

**22.** Procédé selon la revendication 4 ou 21, **caractérisé par le fait que** l'on calcule l'autre facteur complexe variable $K_R$ dépendant du point de fonctionnement selon la forme suivante :

$$\underline{K}_R = - j \cdot \underline{Z}$$

avec

$$\underline{Z} = \hat{\rho} \cdot \hat{\sigma} - \hat{n}_s \cdot \hat{n}_r + j \cdot (\hat{n}_s + \hat{\rho} \cdot \hat{n}_r)$$

avec

$\hat{\rho}$ = rapport de la constante de temps de rotor à la constante de temps de stator de la machine polyphasée

$\hat{\sigma}$ = facteur de dispersion de la machine polyphasée

$\hat{n}_s$ = vitesse angulaire normée du vecteur spatial de flux rotorique normé $\overset{\hat{\psi}_r}{\rightarrow}$ dans le système de référence par rapport au stator (paramètre de fonctionnement)

$\hat{n}_r$ = vitesse angulaire normée du vecteur spatial de flux rotorique normé $\overset{\hat{\psi}_r}{\rightarrow}$ dans le système de référence par rapport au rotor (paramètre de fonctionnement).

**23.** Procédé selon la revendication 3, **caractérisé par le fait que**, par multiplication par un facteur réel formé $K_R$, on détermine à partir d'une partie réelle (Re) du vecteur spatial de superposition produit un écart de régulation ($\Delta \parallel$) qui est destiné au réglage du paramètre de système résistance statorique ($\hat{R}_s$) et qui, multiplié par un facteur de découplage réel $K_E$, est additionné à la partie imaginaire (Im) du vecteur spatial de superposition formé.

**24.** Procédé selon la revendication 23, **caractérisé par le fait que** l'on calcule le facteur réel $K_R$ selon la formule suivante :

$$K_R = \hat{n}_s \cdot (1 - \hat{\sigma})^2 / (2 \cdot \hat{\sigma} \cdot \hat{n}_r)$$

avec

$\hat{\sigma}$ = facteur de dispersion de la machine polyphasée

$\hat{n}_r$ = vitesse angulaire normée du vecteur spatial de flux rotorique normé $\overset{\hat{\psi}_r}{\rightarrow}$ dans le système de référence par rapport au rotor (paramètre de fonctionnement).

**25.** Procédé selon la revendication 23, **caractérisé par le fait que** l'on calcule le facteur de découplage réel $K_E$ selon la formule suivante :

$$K_E = (\hat{\sigma} - \hat{n}_r^2) / \left[\hat{n}_s \cdot (1 - \hat{\sigma})^2\right]$$

avec

$\hat{\sigma}$ = facteur de dispersion de la machine polyphasée

$\hat{n}_r$ = vitesse angulaire normée du vecteur spatial de flux rotorique normé $\overset{\hat{\psi}_r}{\rightarrow}$ dans le système de référence par rapport au rotor (paramètre de fonctionnement)

$\hat{n}_s$ = vitesse angulaire normée du vecteur spatial de flux rotorique normé $\overset{\hat{\psi}_r}{\rightarrow}$ dans le système de référence par rapport au stator (paramètre de fonctionnement).

**26.** Procédé selon la revendication 3, **caractérisé par le fait que** l'on additionne la dérivée temporelle du vecteur spatial de courant différentiel relatif transformé ($\overset{v}{\rightarrow}$) et le vecteur spatial de courant différentiel relatif transformé ($\overset{v}{\rightarrow}$), multiplié par le facteur complexe variable $\underline{K}_\omega$ dépendant du point de fonctionnement, la partie réelle (Re) étant multipliée par un facteur réel $K_R$, ce produit ($\Delta \parallel$) étant multiplié par un facteur de découplage réel $K_E$ et ce dernier produit étant additionné à la partie imaginaire (Im), et que l'on utilise le produit ($\Delta \parallel$) pour le réglage du paramètre de système résistance statorique ($\hat{R}_s$) et l'autre produit pour le réglage de la vitesse de rotation normée ($\hat{n}$) du modèle de machine.

**27.** Procédé selon la revendication 26, **caractérisé par le fait que** l'on calcule le facteur réel $K_R$ selon la formule suivante :

$$K_R = \hat{n}_s \cdot (1 - \hat{\sigma})^2 / (2 \cdot \hat{\sigma} \cdot \hat{n}_r)$$

avec

$\hat{\sigma}$ = facteur de dispersion de la machine polyphasée

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_s$ = vitesse angulaire normée du vecteur spatial de flux rotorique normé $\xrightarrow{\hat{\psi}_r}$ dans le système de référence par rapport au stator (paramètre de fonctionnement).

28. Procédé selon la revendication 26, **caractérisé par le fait que** l'on calcule le facteur de découplage réel $K_E$ selon la formule suivante :

$$K_E = (\hat{\sigma} - \hat{n}_r^2) / \left[\hat{n}_s \cdot (1 - \hat{\sigma})^2\right]$$

avec

$\hat{\sigma}$ = facteur de dispersion de la machine polyphasée

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_s$ = vitesse angulaire normée du vecteur spatial de flux rotorique normé $\xrightarrow{\hat{\psi}_r}$ dans le système de référence par rapport au stator (paramètre de fonctionnement).

29. Procédé selon la revendication 26, **caractérisé par le fait que** l'on calcule le facteur complexe variable $\underline{K}_\omega$ dépendant du point de fonctionnement selon la formule suivante :

$$\underline{K}_\omega = 1 + \hat{\rho} \cdot \hat{n}_r / \hat{n}_s - j \cdot [\hat{\rho} \cdot \hat{\sigma} / \hat{n}_s - \hat{n}_r]$$

avec

$\hat{\rho}$ = rapport de la constante de temps de rotor à la constante de temps de stator de la machine polyphasée
$\hat{\sigma}$ = facteur de dispersion de la machine polyphasée

$\hat{n}_r$ = vitesse angulaire normée du vecteur spatial de flux rotorique normé $\xrightarrow{\hat{\psi}_r}$ dans le système de référence par rapport au rotor (paramètre de fonctionnement)

$\hat{n}_s$ = vitesse angulaire normée du vecteur spatial de flux rotorique normé $\xrightarrow{\hat{\psi}_r}$ dans le système de référence par rapport au stator (paramètre de fonctionnement).

30. Procédé selon la revendication 4 ou 21, **caractérisé par le fait que** l'on multiplie l'écart de régulation déterminé ($\Delta \parallel$) par un signe (sign $\hat{n}_r$).

31. Dispositif pour la mise en oeuvre du procédé selon la revendication 1, avec un traitement de signal (2) qui contient un modèle de machine complet et un dispositif pour la production de signaux de commande ($S_a$, $S_b$, $S_c$), avec un premier et un deuxième multiplieur (18, 20), avec un circuit de mesure de courant (6) avec convertisseur de coordonnées (8) branché du côté aval, avec un comparateur (24, 30) et avec un régulateur de compensation (22), **caractérisé par le fait qu'**un dispositif (44) pour le calcul de facteurs complexes $\underline{K}_\omega$ et $\underline{K}_R$ est branché du côté aval du traitement de signal (2), un multiplieur de valeur réelle ($38_1$) est branché du côté aval du convertisseur de coordonnées (8) et est combiné côté sortie à une première entrée du deuxième multiplieur ($20_1$), un multiplieur de valeur de consigne ($36_1$) est branché du côté aval de la sortie du traitement de signal (2), sortie à laquelle se trouve un vecteur spatial modèle de courant statorique ($\hat{\underline{i}}_s$), et est combiné côté sortie à une première entrée du premier multiplieur ($18_1$), une sortie du dispositif (44) pour le calcul de facteurs complexes $\underline{K}_\omega$ et $\underline{K}_R$, sortie à laquelle se trouve le facteur complexe $\underline{K}_\omega$, est reliée à chaque fois à une deuxième entrée du multiplieur de valeur de consigne et du multiplieur de valeur réelle ($36_1$, $38_1$), une autre sortie du traitement de signal (2), sortie à laquelle se trouve le vecteur spatial de référence complexe conjugué ($\hat{\underline{T}}^*$), est reliée à une deuxième entrée du premier et du deuxième multiplieur ($18_1$, $20_1$) et les sorties des multiplieurs ($18_1$, $20_1$) auxquelles se trouvent les parties imaginaires (WG, WG) sont combinées au comparateur (24) qui est combiné côté sortie par l'intermédiaire du régulateur de compensation (22) à une entrée de paramètre du traitement de signal (2).

**32.** Dispositif pour la mise en oeuvre du procédé selon la revendication 1 et 2, avec un traitement de signal (2) qui contient un modèle de machine complet et un dispositif pour la production de signaux de commande ($S_a$, $S_b$, $S_c$), avec un premier et un deuxième multiplieur (18, 20), avec un circuit de mesure de courant (6) avec convertisseur de coordonnées (8) branché du côté aval et avec un régulateur de compensation (22), **caractérisé par le fait que** la sortie du convertisseur de coordonnées (8) et la sortie du traitement de signal (2) à laquelle se trouve un vecteur spatial modèle de courant statorique ($\hat{\underline{i}}_s$) sont reliées à un dispositif comparateur (46) qui est combiné côté sortie à chaque fois à une première entrée d'un multiplieur de valeur de consigne et d'un multiplieur de valeur réelle (36, 38), un dispositif (44) pour le calcul de facteurs complexes $\underline{K}_\omega$ et $\underline{K}_R$ est branché du côté aval du traitement de signal (2) et ses sorties sont reliées à chaque fois à une deuxième entrée du multiplieur de valeur de consigne et du multiplieur de valeur réelle (36, 38), les sorties de ces multiplieurs de valeur de consigne et de valeur réelle (36, 38) sont combinées à une première entrée du premier et du deuxième multiplieur (18, 20) tandis qu'une deuxième entrée de ces multiplieurs (18, 20) est reliée à une sortie du traitement de signal (2) à laquelle se trouve le vecteur spatial de référence complexe conjugué ($\hat{\underline{T}}^*$) et une sortie du premier multiplieur (18) à laquelle se trouve l'écart de régulation ($\Delta\perp$) est combinée au moyen du régulateur de compensation (22) à une entrée de paramètre du traitement de signal (2).

**33.** Dispositif selon la revendication 31, **caractérisé par le fait qu'**un deuxième multiplieur de valeur réelle ($38_2$) est branché du côté aval du convertisseur de coordonnées (8) et est combiné côté sortie à une première entrée du deuxième multiplieur ($20_2$), un deuxième multiplieur de valeur de consigne ($36_2$) est branché du côté aval de la sortie du traitement de signal (2) à laquelle se trouve un vecteur spatial modèle de courant statorique ($\hat{\underline{i}}_s$) et est combiné côté sortie à une première entrée du premier multiplieur ($18_2$), les sorties du traitement de signal (2) auxquelles se trouvent les facteurs complexes $\underline{K}_\omega$ et $\underline{K}_R$ sont reliées à chaque fois à une deuxième entrée du multiplieur de valeur de consigne et du multiplieur de valeur réelle ($36_2$, $38_2$), une autre sortie du traitement de signal (2) à laquelle se trouve le vecteur spatial de référence complexe conjugué ($\hat{\underline{T}}^*$) est reliée à une deuxième entrée du premier et du deuxième multiplieur ($18_2$, $20_2$) et les sorties des multiplieurs ($18_2$, $20_2$) auxquelles se trouvent les parties réelles ($\hat{BG}$, BG) sont combinées à un autre comparateur (30) qui est combiné côté sortie par l'intermédiaire d'un autre régulateur de compensation (32) à une autre entrée de paramètre du traitement de signal (2).

**34.** Dispositif selon la revendication 32, **caractérisé par le fait que** la sortie du deuxième multiplieur (20) à laquelle se trouve l'écart de régulation ($\Delta \parallel$) est combinée au moyen d'un autre régulateur de compensation (32) à une autre entrée de paramètre du traitement de signal (2).

**35.** Dispositif selon la revendication 33 ou 34, **caractérisé par le fait qu'**un multiplieur (34) est branché du côté amont de l'autre régulateur de compensation (32) et sa deuxième entrée est combinée à une sortie du traitement de signal (2) à laquelle se trouve un signal de signe (sign $\hat{n}_r$).

**36.** Dispositif selon la revendication 32, **caractérisé par le fait que** le dispositif comparateur (46) est combiné côté sortie à un intégrateur (48) qui est relié côté sortie par l'intermédiaire d'un autre multiplieur (50) à un additionneur (52) dont la première entrée est combinée au multiplieur de valeur de consigne (36) et dont la sortie est combinée à une première entrée du premier multiplieur (18) et une deuxième entrée de l'autre multiplieur (50) est reliée à une sortie du dispositif (44) pour le calcul des facteurs complexes $\underline{K}_\omega$, $\underline{K}_R$ et $\underline{K}_I$, sortie à laquelle se trouve le facteur complexe $\underline{K}_I$.

**37.** Dispositif selon les revendications 32 et 36, **caractérisé par le fait que** le dispositif comparateur (46) est combiné côté sortie à un différentiateur (56) qui est relié côté sortie à une autre entrée de l'additionneur (52).

**38.** Dispositif selon la revendication 32, **caractérisé par le fait que** le dispositif comparateur (46) est relié côté sortie à une première entrée d'un autre multiplieur (58) dont la deuxième entrée est combinée à une sortie du traitement de signal (2) à laquelle se trouve le vecteur spatial de référence complexe conjugué ($\xrightarrow{\hat{T}}{}^\star$) et dont la sortie est reliée d'une part à un autre additionneur (60) et d'autre part à un différentiateur (62) dont la sortie est combinée à une entrée d'un autre additionneur (64), une sortie du traitement de signal (2) à laquelle se trouve une fréquence statorique imaginaire négative (- j $\hat{n}_s$) est reliée à chaque fois à une première entrée de deux autres multiplieurs (68, 70), une deuxième entrée de l'autre multiplieur (70) étant combinée à la sortie de l'autre additionneur (60) et la sortie de cet autre multiplieur (70) étant combinée à l'autre additionneur (64), la sortie de l'autre additionneur (60) est reliée d'une part à une entrée d'un intégrateur (72) et d'autre part à une première entrée du multiplieur de valeur de consigne (36), la sortie de cet intégrateur (72) étant combinée d'une part à une deuxième entrée de l'autre multiplieur (68) et d'autre part à une première entrée d'un multiplieur (50) dont la deuxième entrée est reliée à une sortie du dispositif (44) à laquelle se trouve un facteur complexe $\underline{K}_I$ et les sorties du multiplieur (50), du multiplieur de valeur de consigne (36) et de l'additionneur (64) sont reliées à des entrées d'un additionneur (52) dont la deuxième sortie est combinée au régulateur de compensation (22).

**39.** Dispositif selon la revendication 38, **caractérisé par le fait que** la deuxième sortie de l'additionneur (52) est reliée au moyen d'un autre additionneur (86) au régulateur de compensation (22), une première sortie de cet additionneur (52) est combinée à une première entrée d'un multiplieur (78) dont la deuxième entrée est reliée à une sortie du dispositif (44) à laquelle se trouve un facteur réel $K_R$ et dont la sortie est reliée d'une part à une entrée d'un multiplieur (80) et d'autre part à l'autre régulateur de compensation (32) et la deuxième entrée du multiplieur (80) est combinée à une sortie du dispositif (44) à laquelle se trouve un facteur de découplage réel $K_E$ et sa sortie est combinée à l'additionneur (86).

**40.** Dispositif selon la revendication 32, **caractérisé par le fait que** le dispositif comparateur (46) est relié côté sortie à une première entrée d'un autre multiplieur (58) dont la deuxième entrée est combinée à une sortie du traitement de signal (2) à laquelle se trouve le vecteur spatial de référence complexe conjugué ($\xrightarrow{\hat{T}}{}^\star$) et dont la sortie est reliée d'une part à un différentiateur (62) et d'autre part à une première entrée du multiplieur de valeur de consigne (36), les sorties du différentiateur (62) et du multiplieur de valeur de consigne (36) sont combinées à des entrées d'un additionneur (52), la deuxième entrée du multiplieur de valeur de consigne (36) étant reliée à une sortie du dispositif (44) à laquelle se trouve le facteur complexe $\underline{K}_\omega$, une première sortie de l'additionneur (52) est combinée à une première entrée d'un multiplieur (78) dont la deuxième entrée est reliée à une sortie du dispositif (44) à laquelle se trouve un facteur réel $K_R$ et dont la sortie est reliée d'une part à une entrée d'un multiplieur (80) et d'autre part à l'autre régulateur de compensation (32) et la deuxième entrée du multiplieur (80) est combinée à une sortie du dispositif (44) à laquelle se trouve un facteur de découplage réel $K_E$ et sa sortie est combinée à l'additionneur (86).

FIG 1

EP 0 956 641 B1

FIG 2

FIG 3

$$\tilde{u} = -\mathrm{Im}\left\{ \Delta \underset{\rightarrow}{\tilde{y}}_s \cdot (1 + j \cdot \tilde{n}_r) \cdot \underset{\rightarrow}{\tilde{\Psi}}_r^* / |\underset{\rightarrow}{\tilde{\Psi}}_r|^2 \right\} / \Delta n$$

$\tilde{n}_r \approx 0,5$

1

$\tilde{n}_r = 0$

$\tilde{n}_r = 0,5$

$\tilde{n}_r = 1$

$\rho = 0,757$

$\sigma = 0,167$

0

1

0,5

0

0

$-0,2$

$-4$    $-2$    0    2    4    $\tilde{n}_s$

Generatorbetrieb

Motorbetrieb

FIG 4

EP 0 956 641 B1

FIG 5

EP 0 956 641 B1

FIG 6

FIG 7

FIG 8